(19) Europäisches Patentamt / European Patent Office / Office européen des brevets

(11) **EP 3 071 936 B1**

(12) **EUROPÄISCHE PATENTSCHRIFT**

(45) Veröffentlichungstag und Bekanntmachung des Hinweises auf die Patenterteilung:
**15.07.2020   Patentblatt 2020/29**

(21) Anmeldenummer: **14790067.4**

(22) Anmeldetag: **27.10.2014**

(51) Int Cl.:
**G01F 1/684** *(2006.01)*      **G01F 1/688** *(2006.01)*
**G01F 15/02** *(2006.01)*

(86) Internationale Anmeldenummer:
**PCT/EP2014/072972**

(87) Internationale Veröffentlichungsnummer:
**WO 2015/074833 (28.05.2015 Gazette 2015/21)**

(54) **MESSGERÄT UND VERFAHREN ZUR BESTIMMUNG EINES KORRIGIERTEN MASSEDURCHFLUSSES UND VERWENDUNGEN DES MESSGERÄTES**

MEASURING DEVICE AND METHOD FOR DETERMINING A CORRECTED MASS FLOW, AND USES OF THE MEASURING DEVICE

APPAREIL DE MESURE ET PROCÉDÉ DE DÉTERMINATION D'UN DÉBIT DE MATIÈRE CORRIGÉ ET UTILISATION DE L'APPAREIL DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2013   DE 102013112729**
**13.05.2014   DE 102014106729**

(43) Veröffentlichungstag der Anmeldung:
**28.09.2016   Patentblatt 2016/39**

(73) Patentinhaber: **Endress+Hauser Flowtec AG**
**4153 Reinach (BL) (CH)**

(72) Erfinder:
• **BADARLIS, Anastasios**
**CH-4127 Birsfelden (CH)**
• **PFAU, Axel**
**CH-4147 Aesch (CH)**
• **POPP, Oliver**
**CH-4104 Oberwil (CH)**
• **KUMAR, Vivek**
**CH-4123 Allschwil (CH)**
• **SCHULTHEIS, Hanno**
**79539 Lörrach (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**US-A- 5 235 844     US-A- 5 311 447**

• **GAUTHIER S ET AL: "Gas thermal conductivity measurement using the three-omega method", SENSORS AND ACTUATORS A (PHYSICAL) ELSEVIER SEQUOIA S.A. SWITZERLAND, Bd. 195, 1. Juni 2013 (2013-06-01), Seiten 50-55, XP002736198, ISSN: 0924-4247 in der Anmeldung erwähnt**

# EP 3 071 936 B1

## Beschreibung

Die vorliegende Erfindung betrifft ein Verfahren zum Betreiben eines Messgerätes nach dem Oberbegriff des Anspruchs 1 und ein Messgerät nach dem Oberbegriff des Anspruchs 15. Die Erfindung betrifft zudem eine Reihe neuer Verwendungen, in welchen diese Art eines Messgerätes noch nicht eingesetzt wird.

Es sind eine Reihe Sensoren bekannt, welche thermisch-physikalische Eigenschaften messen. So wird in der Veröffentlichung "Beigelbeck, R., F. Kohl, S. Cerimovic, A. Talic, F. Keplinger, and B. Jakoby. "Thermal property determination of laminar-flowing fluids utilizing the frequency response of a calorimetric flow sensor." In Sensors, 2008 IEEE, pp. 518-521. IEEE, 2008" ein sehr sensitiver Sensor beschrieben, welcher basierend auf einem mathematischen Modell eine Bestimmung der thermischen Wärmeleitfähigkeit K und der Temperaturleitfähigkeit $\alpha$ ermittelt.

Die Veröffentlichung "Kliche, K., S. Billat, F. Hedrich, C. Ziegler, and R. Zengerle. "Sensor for gas analysis based on thermal conductivity, specific heat capacity and thermal diffusivity." In Micro Electro Mechanical Systems (MEMS), 2011 IEEE 24th International Conference on, pp. 1189-1192. IEEE, 2011" beschreibt eine Reihe von Sensoren, welche bestimmt sind zur Messung von thermisch-physikalischen Eigenschaften.

Eine Vielzahl wissenschaftlicher Artikel setzen sich zudem mit der 3-omega Methode zur Bestimmung der thermischen Wärmeleitfähigkeit auseinander. Diese Methode wird beispielsweise auch in der Veröffentlichung "Gauthier, Sebastian, Alain Giani, and Philippe Combette. "Gas thermal conductivity measurement using the three-omega method." Sensors and Actuators A: Physical (2013)." Aufgegriffen
Vibrierende Sensoren zur Bestimmung der Viskosität und Dichte wurden bereits in mehreren wissenschaftlichen Veröffentlichungen behandelt.

Micro-Cantilever werden u.a. in der Veröffentlichung "Naeli, Kianoush, and Oliver Brand. "Dimensional considerations in achieving large quality factors for resonant silicon cantilevers in air." Journal of Applied Physics 105, no. 1 (2009): 014908-014908" beschrieben.

Weiterentwickelte Konzepte zur Verwendung von Cantilever-Modellen in Fluiden werden in den Veröffentlichungen "Van Eysden, Cornelis A., and John E. Sader. "Frequency response of cantilever beams immersed in compressible fluids with applications to the atomic force microscope." Journal of Applied Physics 106, no. 9 (2009): 094904-094904" und "Ghatkesar, Murali Krishna, Ekaterina Rakhmatullina, Hans-Peter Lang, Christoph Gerber, Martin Hegner, and Thomas Braun. "Multi-parameter microcantilever sensor for comprehensive characterization of Newtonian fluids." Sensors and Actuators B: Chemical 135, no. 1 (2008): 133-138" erörtert.

Die Veröffentlichung "Goodwin, A. R. H., A. D. Fitt, K. A. Ronaldson, and W. A. Wakeham. "A vibrating plate fabricated by the methods of microelectromechanical systems (MEMS) for the simultaneous measurement of density and viscosity: results for argon at temperatures between 323 and 423K at pressures up to 68 MPa." International journal of thermophysics 27, no. 6 (2006): 1650-1676" beschreibt die Verwendung von vibrierenden Platten zur Bestimmung von Viskosität und Dichten einiger Gase durch ein entsprechend entwickeltes mathematisch-physikalisches Modell.

US 5,311,447 A1 offenbart ein Messgerät mit zwei Sensoren gemäß dem Stand der Technik. Die Schritte des erfindungsgemäßen Verfahrens sind in diesem Dokument nicht offenbart.

Ausgehend von diesem Stand der Technik ist es nunmehr Aufgabe der vorliegenden Erfindung ein Messgerät anzubieten, welches in der Lage ist mehrere Eigenschaften des Messmediums zu bestimmen und sich zugleich durch eine kompakte Bauweise auszeichnet.

Die Aufgabe wird durch ein Verfahren zum Betreiben eines Messgerätes mit den Merkmalen des Anspruchs 1 gelöst. Zudem wird ein Messgerät mit den Merkmalen des Anspruchs 15 bereitgestellt. Zudem werden eine Reihe von Verwendungen des Messgerätes offenbart, welche bislang für diese Klasse von Messgeräten größtenteils nicht bekannt war und zu einer Technologiesubstitution von anderen Messgeräten führt.

Das erfindungsgemäße Messgerät weist zumindest ein erstes Bauteil auf, in welchem ein integraler Messkanal vorgesehen ist oder das erste Bauteil bildet in Verbindung mit weiteren Bauteilen einen Messkanal integral im Messgerät aus. Integral bedeutet in diesem Zusammenhang, dass das Material des Bauteils teilweise oder vollständig den Messkanal begrenzt. Es ist somit kein Messrohr notwendig. Als erstes Bauteil eignet sich vorzugsweise ein Substratkörper aus Keramik oder Metall.

Der Messkanal ist vorgesehen zur Leitung eines Messmediums durch das Messgerät.

Das Messgerät weist einen ersten Sensor auf, zur Bestimmung einer ersten thermisch-physikalische Eigenschaft, ausgesucht aus der thermischen Wärmeleitfähigkeit K, der Temperaturleitfähigkeit $\alpha$ und/oder der spezifischen Wärmekapazität $\rho c_p$ des Messmediums.

Dieser Sensor kann in einer ersten bevorzugten konstruktiv-einfachen Ausführungsvariante einen RTD, einen beheizbaren Widerstandstemperatursensor, als Heizelement aufweisen. Durch die Omega-3 Messmethode kann dieses Heizelement sowohl beheizt werden und zugleich die Mediumstemperatur messen. Somit sind bei dieser Ausführungsvariante keine weiteren Sensorelemente notwendig um die thermischen Wärmeleitfähigkeit K, der Temperaturleitfähigkeit $\alpha$ und/oder der spezifischen Wärmekapazität $\rho c_p$ des Messmediums zu bestimmen.

In einer zweiten Ausführungsvariante kann der Sensor aus einem Heizelement und einem oder mehreren Temperatursensorelementen bestehen, welche die Temperatur des Mediums nahe dem Heizelement ermitteln. Aus der zugeführten Wärmemenge und der ermittelten Temperatur kann dann der Sensor die thermischen Wärmeleitfähigkeit K, der Temperaturleitfähigkeit $\alpha$ und/oder der spezifischen Wärmekapazität $\rho c_p$ des Messmediums bestimmen.

Der zweite Sensor, welcher vibriert und daher diese Vibrationen ins Messmedium überträgt, kann es sich um unterschiedliche Sensorelemente handeln. Als bevorzugte Variante können einer oder mehrere Cantileverarme genutzt werden. Es kann aber auch eine vibrierende Platte oder ein anderes vibrierendes flaches Element vorgesehen sein. Der zweite Sensor muss sich nicht zwingend auf demselben Bauteil befinden wie der erste Sensor, sondern kann sich beispielsweise auch auf einem zweiten Bauteil, insbesondere einem gesonderten Substratkörper befinden. Um allerdings die Messung desselben Mediumvolumens zu gewährleisten, sollte ein vom ersten zum zweiten Sensor verlaufender Messkanal vorgesehen sein, welcher sich vom ersten Bauteil über sich daran anschließenden Bauteile bis hin zu einem zweiten Bauteil erstreckt, auf welchem Bauteil der zweite Sensor angeordnet ist.

Es ist jedoch messtechnisch und auch fertigungstechnisch von Vorteil, wenn beide Sensoren auf ein- und demselben Bauteil angeordnet sind.

Bei der vorgenannten bevorzugten ersten und zweiten Ausführungsvariante handelt es sich bei dem Messgerät um einen Sensor zur Bestimmung von Eigenschaften des Mediums.

In weiteren Ausführungsvarianten umfasst der Sensor zumindest die Sensorelemente der ersten und/oder der zweiten Ausführungsvariante und zumindest einen weiteren Temperatursensor. Die Sensorelemente der ersten und/oder zweiten Ausführungsvariante sind gemeinsam als ein aktives Sensorelement zu verstehen, welches nachfolgend als Heizer beschrieben wird.

Das oder die zusätzlich zu dem Heizer angeordneten Temperatursensoren sind als passive Sensorelemente im Sinne der vorliegenden Anmeldung zu verstehen. Durch das oder die zusätzlichen passiven Sensorelemente wird eine Ermittlung des thermischen Massedurchflusses ermöglicht.

Der Heizer, mit dem Heizelement und ggf. den weiteren Temperatursensorelementen, kann nach einer bevorzugten Ausführungsvariante der Erfindung dabei aus einem oder mehreren schmalen Metallstreifen bestehen, welche gerade, ring- oder bogenförmig auf dem ersten Bauteil angeordnet ist. Gleiches gilt vorzugsweise für die passiven Sensorelemente

Die Form der aktiven und/oder der passiven Sensorelemente kann beispielsweise durch Auftrag einer Metallschicht auf den Substratkörper erreicht werden und einen sich daran anschließenden Ätzvorgang, in welchem die Kontur des Heizelements z.B. durch eine Maskierung bestimmter Abschnitte, herausgebildet wird.

Optional kann auf das Heizelement auch eine Schutzschicht aufgetragen werden, welche das Heizelement vor Schädigung mechanischer oder chemischer Natur schützt.

Sofern das Messgerät als ein thermisches Massendurchflussmessgerät ist, erfolgt durch den ersten Sensor die Bestimmung des Massendurchflusses des Messmediums durch den Messkanal. Hierfür weist der erste Sensor vorzugsweise zusätzlich zu den vorgenannten Sensorelementen, aus welchen sich der Heizer zusammensetzt auch zumindest ein passives Sensorelement auf. Eine zuverlässigere Messung lässt sich allerdings anhand von zumindest zwei passiven Sensorelementen durchführen.

Der erste Sensor ermittelt temperaturproportionale Messwerte und Messwerte bezüglich der eingespeisten Wärmemenge. Der zweite Sensor kann beispielsweise Spannungswerte messen, welche auf die Schwingungsdämpfungen des Mediums schließen lassen. Es ist von Vorteil, wenn das Messgerät zumindest eine Auswerteeinheit aufweist, welche aus Messwerten, welche durch den ersten und/oder zweiten Sensor gemessen werden, zumindest die thermische Wärmeleitfähigkeit K, die Temperaturleitfähigkeit a, die spezifische Wärmekapazität $\rho c_p$, die Viskosität $\mu$ und/oder der Dichte p des Messmediums bestimmt.

Es ist insbesondere von Vorteil, wenn es sich bei dem Messgerät um ein MEMS-Messgerät oder ein Dünnschicht-Messgerät handelt, wobei das Messgerät besonders bevorzugt als ein Durchflussmessgerät ausgebildet ist. Ein MEMS-Messgerät (Microelectromechanical System) oder Dünnschicht-Messgerät zeichnet sich durch sehr geringe Bauhöhen und eine Chipbauweise aus. Ein MEMS-Durchflussmessgerät weist vorzugsweise eine Dimensionierung einer Größe kleiner als einem Wafer auf. Besonders bevorzugte Größen für ein entsprechendes Durchflussmessgerät liegen jedoch unterhalb von 5 cm$^2$.

Das Messgerät kann insbesondere zur Bestimmung der Produkteigenschaften von Gasen oder Flüssigkeiten und/oder der Zusammensetzung eines Gas- oder Flüssigkeitsgemisches genutzt werden.

Erst durch die kombinierte Ermittlung von Produkteigenschaften kann eine effektive Korrektur eines Massendurchflusses bei einem unbekannten Medium erfolgen.

Ein entsprechendes erfindungsgemäßes Verfahren zur Bestimmung eines korrigierten Massedurchflusses eines Messmediums mit einem Messgerät, insbesondere einem Messgerät gemäß Anspruch 15, umfasst die folgenden Schritte:

a) Bestimmung eines thermischen Massedurchflusses des Messmediums;
b) Bestimmung zumindest einer thermisch-physikalischen Eigenschaft ausgesucht aus der thermischen Wärme-

EP 3 071 936 B1

leitfähigkeit K, der Temperaturleitfähigkeit $\alpha$ und/oder der spezifischen Wärmekapazität $\rho c_p$ des Messmediums durch einen ersten Sensor des Messgerätes;

c) Bestimmung zumindest der Dichte und/oder der Viskosität des Messmediums durch einen zweiten Sensor, welcher vibriert und

d) Korrektur des thermischen Massedurchflusses des Messmediums anhand der ermittelten thermisch-physikalischen Eigenschaft des Messmediums und der Dichte und/oder Viskosität des Messmediums.

Die Korrektur des thermischen Massedurchflusses kann vorzugsweise mittels zumindest einer Auswerteeinheit erfolgt.

Nachflogend wird zudem ein besonders bevorzugtes Verfahren zum Betreiben des Messgerätes beschrieben.

Bei dem erfindungsgemäßen Verfahren handelt es sich um ein Verfahren zum Betreiben eines Messgerätes, insbesondere eines Durchfluss-Messgerätes, zur Bestimmung der Konzentration, des Volumenanteils, des Massenanteils und/oder des Partialdruckes zumindest einer Komponente in einem mehrkomponentigen Messmedium wobei das Messgerät zumindest

A einen ersten Sensor (11, 31, 41) aufweist, zur Bestimmung einer ersten thermisch-physikalische Eigenschaft, ausgesucht aus der Wärmeleitfähigkeit K, der Temperaturleitfähigkeit $\alpha$ und/oder der spezifischen Wärmekapazität $c_p$ des Messmediums aufweist,
und wobei das Messgerät zumindest

B einen zweiten Sensor (12) aufweist, welcher zur Bestimmung der Viskosität $\mu$ und/oder der Dichte $\rho$ des Messmediums (M) vorgesehen ist.

Das erfindungsgemäße Verfahren ist gekennzeichnet durch die folgenden Schritte:

a) Bereitstellen von Informationen hinsichtlich der Art der möglichen Komponenten des Messmediums;
b) Bereitstellen von Datensätzen bezüglich der Fluideigenschaften, nämlich der Viskosität, der Dichte, der Wärmeleitfähigkeit, der Temperaturleitfähigkeit, der spezifischen Wärmekapazität und/oder darauf rückführbare Werte für Einzelkomponenten und/oder Komponentengemische, welche mit den Fluideigenschaften korrespondieren, welche durch den ersten und den zweiten Sensor bestimmt werden;
c) Ermitteln von Messwerten des ersten und des zweiten Sensors, mit welchen zumindest zwei Fluideigenschaften des mehrkomponentigen Messmediums rückführbar, insbesondere berechenbar, sind, wobei eine erste Fluideigenschaft ausgesucht ist aus der Viskosität des Messmediums und der Dichte des Messmediums und eine zweite Fluideigenschaft ausgesucht ist aus der Wärmeleitfähigkeit des Messmediums, der Temperaturleitfähigkeit des Messmediums oder der spezifischen Wärmekapazität des Messmediums
d) Ermittlung einer Konzentration, eines Masseanteils, eines Volumenanteils und/oder eines Partialdrucks zumindest einer Komponente des mehrkomponentigen Messmediums anhand der Messwerte oder zumindest zwei der daraus ermittelten Fluideigenschaften und den Datensätzen.

Nachfolgend werden einzelne Schritte und Ausgestaltungsvarianten des bevorzugten Verfahrens näher erläutert.

In dem besonders bevorzugten Verfahren zum Betreiben eines Messgerätes, insbesondere eines Durchfluss-Messgerätes, kann die Bestimmung der Konzentration, des Volumenanteils, des Massenanteils und/oder des Partialdruckes zumindest einer Komponente in einem mehrkomponentigen Messmedium erfolgen. Dabei ist das Messgerät zumindest mit einem ersten Sensor ausgestattet, welcher zur Bestimmung einer ersten thermisch-physikalische Eigenschaft, ausgesucht aus der Wärmeleitfähigkeit K, der Temperaturleitfähigkeit $\alpha$ und/oder der spezifischen Wärmekapazität $c_p$ des Messmediums geeignet ist, sowie mit zumindest einem zweiten Sensor, welcher zur Bestimmung der Viskosität $\mu$ und/oder der Dichte $\rho$ des Messmediums vorgesehen ist.

Das besonders bevorzugte Verfahren kann sich durch mehrere Verfahrensschritte auszeichnen, welche nicht zwingend in alphabetischer Reihenfolge erfolgen müssen, insbesondere hinsichtlich der Schritte a) und b).

In Schritt a) kann vorzugsweise ein Bereitstellen von Informationen hinsichtlich der Art der möglichen Komponenten des Messmediums erfolgen. Dabei können alle in Frage kommenden Komponenten eingegeben werden. Falls eine Komponente nicht im Messmedium enthalten ist, so beträgt deren Anteil "Null" und ihre Konzentration wird entsprechend ausgegeben. Idealerweise ist dem Nutzer jedoch die vollständige Anzahl an Komponenten und deren Art bekannt. Falls im Messmedium eine Komponente vorkommt, zu welcher keine Information hinsichtlich ihrer Art vorliegt, so kann es ggf. zu einer Fehlinterpretation hinsichtlich der Datensätze in der Folge kommen.

In Schritt b) erfolgt das Bereitstellen von Datensätzen bezüglich der Fluideigenschaften, nämlich der Viskosität, der Dichte, der Wärmeleitfähigkeit, der Temperaturleitfähigkeit, der spezifischen Wärmekapazität und/oder darauf rückführbare Werte für Einzelkomponenten und/oder Komponentengemische, welche mit den Fluideigenschaften korres-

4

pondieren, welche durch den ersten und den zweiten Sensor bestimmt werden. Rückführbare Werte sind in diesem Kontext sowohl Werte bzw. physikalische Größen, welche sich aus einer oder mehreren bekannten Fluideigenschaften, und ggf. unter Verwendung von Konstanten, berechnen lassen. Rückführbare Werte können auch direkt gemessene Spannungen, Amplituden und dergl. sein, aus welchen die Fluideigenschaften bestimmbar sind. Das heißt, in der Datenbank müssen nicht zwingend die vorgenannten Fluideigenschaften abgelegt sein, sondern es können auch bereits in die Messgröße umgerechnete Werte gespeichert vorliegen. Da aus den Messgrößen (Spannungswerte usw.) die Fluideigenschaften berechenbar sind, können aus den bekannten (vorgegebenen) Fluideigenschaften der Einzelkomponenten bei bekannten Parametern (z.B. Messrohrradius usw.) auch bereits die theoretischen Werte für jeweilige Messgröße mittels Algorithmen berechnet und als Datensatz abgelegt sein.

So können im folgenden Schritt beispielsweise entweder die gemessenen und theoretischen Fluideigenschaften verglichen werden oder die gemessenen und theoretischen Werte der Messgrößen verglichen werden.

In Schritt c) erfolgt ein Ermitteln von Messwerten des ersten und des zweiten Sensors, mit welchen zumindest zwei Fluideigenschaften des mehrkomponentigen Messmediums rückführbar, insbesondere berechenbar, sind, wobei eine erste Fluideigenschaft ausgesucht ist aus der Viskosität des Messmediums und der Dichte des Messmediums und eine zweite Fluideigenschaft ausgesucht ist aus der Wärmeleitfähigkeit des Messmediums, der Temperaturleitfähigkeit des Messmediums oder der spezifischen Wärmekapazität des Messmediums.

Das Ermitteln ist hierbei das aktive Erfassen bzw. Messen von Messwerten in den entsprechenden Messgrößen und ggf. deren Umrechnung in Fluideigenschaften, bei bekannten Prozessparametern.

Schließlich erfolgt in Schritt d) die Ermittlung einer Konzentration, eines Masseanteils, eines Volumenanteils und/oder eines Partialdrucks zumindest einer Komponente des mehrkomponentigen Messmediums anhand der Messwerte oder zumindest zwei der daraus ermittelten Fluideigenschaften und den Datensätzen. Dies kann durch einen Vergleich, z.B. durch Vergleichsoperationen, oder Berechnung oder auf andere Weise erfolgen.

Das vorgenannte bevorzugte Verfahren zum Betreiben des Messgerätes kann zudem durch weitere Ausgestaltungsvarianten und/oder Verfahrensschritte ergänzt werden. So ist es z.B. von Vorteil wenn in Schritt c) Messwerte ermittelt werden, auf welche zumindest drei der Fluideigenschaften rückführbar sind und dass in Schritt d) die Ermittlung anhand dieser Messwerte oder zumindest der drei Fluideigenschaften mit den Datensätzen erfolgt. Dadurch wird die Bestimmung genauer, insbesondere bei zunehmender Anzahl an Komponenten.

Das vorgenannte Verfahren lässt sich besonders gut zur Konzentrationsmessung von Einzelkomponenten von Gasgemischen, insbesondere für binäre, ternäre oder quaternäre Gasgemische, anwenden. Auch Flüssigkeitsgemische, Lösungen, z.B. Salzlösungen, und dergl. lassen sich bestimmen, jedoch nimmt die Messunsicherheit zu. Ebenfalls ist es möglich Gasgemische mit mehr als 4 Komponenten hinsichtlich der Konzentrationen der Einzelkomponenten zu bestimmen, wobei allerdings auch hierbei die Messunsicherheit und die Chance zu einer Fehlzuordnung der Messergebnisse zu einem Datensatz mit der Zahl der Komponenten steigt.

Um entsprechende Messunsicherheiten und mögl. Fehlzuordnungen weiter zu verringern ist es von Vorteil, wenn in Schritt c) Messwerte ermittelt werden, auf welche zumindest vier der Fluideigenschaften rückführbar sind und dass in Schritt d) die Ermittlung anhand dieser Messwerte oder zumindest der drei Fluideigenschaften mit den Datensätzen verglichen werden. Hierfür werden in den konkreten Ausführungsbeispielen entsprechende Sensoren bzw. Messaufnehmer in kompakter Ausgestaltung vorgestellt, welche nach dem Verfahren betrieben werden können.

Die Temperatur des mehrkomponentigen Mediums kann vorteilhaft ermittelt werden und bei der Berechnung der Konzentration, des Masseanteils, des Volumenanteils oder des Partialdrucks der zumindest einen Komponente des mehrkomponentigen Messmediums berücksichtigt werden. So ist es beispielsweise möglich einen Korrekturalgorithmus für die temperaturbedingten Änderungen der Fluideigenschaften vorzusehen oder aber Datensätze für unterschiedliche Temperaturbereiche in der Datenbank zu hinterlegen. Analog kann auch beim Druck vorgegangen werden.

Die Ermittlung in Schritt d) kann besonders vorteilhaft durch einen Vergleich der Datensätze mit den Messwerten oder zumindest zwei der daraus ermittelten Fluideigenschaften aus Schritt c) erfolgen. Die Datensätze können als Datenbank für eine Vielzahl von Komponenten und Komponentengemische in einer Speichereinheit hinterlegt sein. Dabei ist es allerdings nicht zwingend notwendig, dass diese Speichereinheit Teil der Auswerteeinheit ist. Ebenso kann die Auswerteeinheit abgesetzt vom Messaufnehmer ausgebildet sein. Folglich müssen einzelne Teile des Messgerätes nicht zwingend eine bauliche Einheit darstellen, sondern können miteinander, z.B. über wireless oder andere Kommunikationswege miteinander kommunizieren.

Es ist von Vorteil, wenn das vorgenannte bevorzugte Verfahren zur Konzentration zudem folgende weitere Schritte umfasst:

- Bereitstellen von Daten hinsichtlich zumindest eines Grenzwertes einer Konzentration, des Partialdruckes, des Massenanteils oder des Volumenanteils einer Komponente; und
- Ausgabe eines Hinweises bei Überschreitung und/oder Unterschreitung des Grenzwertes.

Somit kann das Messgerät einen weiteren Betriebsmodus aufweisen. Dabei wird zunächst ein Grenzwert, z.B.

eine Konzentrationsobergrenze einer Stoffkomponente, vorgegeben. Dieser Grenzwert kann je nach Anwendung bei Unterschreitung oder Überschreitung einen Hinweis ausgeben. Der Hinweis kann u.a. ein Steuerbefehl zum Öffnen eines Ventils sein. Dies ist z.B. der Fall, wenn eine vorbestimmte Ausbeute, also eine Menge an Produkt, bei einer Synthesereaktion erreicht ist. Alternativ kann ein Unterschreiten eines Grenzwertes, z.B. eines Ausgangsstoffes anzeigen, dass mehr von diesem Ausgangsstoff der Synthese zugeführt werden muss, um ein chemisches Gleichgewicht herzustellen. Hierbei kann der Steuerbefehl ein entsprechendes Ventil ansteuern. Eine zweite Möglichkeit eines Hinweises wäre ein Warnhinweis. Wenn es theoretisch nicht möglich ist, dass eine Komponente einen bestimmten Grenzwert über- oder unterschreitet und das Messgerät eine solche Änderung trotzdem detektiert, so kann dies ein Hinweis auf eine falsche Zuordung eines Datensatzes zu einer Mediumszusammensetzung sein.

Das vorliegende Verfahren zielt auf die Bestimmung der Konzentration, des Volumenanteils, des Massenanteils und/oder des Partialdruckes zumindest einer Komponente oder ggf. mehrerer Komponenten in einem mehrkomponentigen Messmedium ab. Diese Daten können zur Weiterverarbeitung z.B. an ein Computersystem weitergeleitet werden, welches eine diese Daten beispielsweise zur Prozesssteuerung nutzen kann. Zur Überprüfung der ermittelten Daten durch den Endnutzer ist es von jedoch von Vorteil, wenn eine Ausgabe, insbesondere eine visuelle Anzeige, der Konzentration, des Masseanteils, des Volumenanteils oder des Partialdrucks der zumindest einen Komponente des mehrkomponentigen Messmediums durch eine Ausgabeeinheit erfolgt.

Es ist zudem von Vorteil weitere Messwerte oder eine oder mehrere weitere Fluideigenschaften, insbesondere die Schallgeschwindigkeit, welche eine Bestimmung der Konzentration, des Massenanteils, des Volumenanteils und/oder des Partialdruckes einer oder mehrerer Komponenten ermöglichen, zu messen und der Auswerteeinheit zur Verfügung zu stellen.

Ein erfindungsgemäß ausgestaltetes Messgerät kann zumindest

A einen ersten Sensor (11, 31, 41) auf, zur Bestimmung einer ersten thermisch-physikalische Eigenschaft, ausgesucht aus der thermischen Wärmeleitfähigkeit K, der Temperaturleitfähigkeit $\alpha$ und/oder der spezifischen Wärmekapazität $\rho c_p$ des Messmediums,
und
B einen zweiten Sensor (12) auf, welcher zur Bestimmung der Viskosität $\mu$ und/oder der Dichte $\rho$ des Messmediums (M) vorgesehen ist,

aufweisen

Zudem kann das Messgerät eine Auswerteeinheit aufweisen, welche ausgebildet ist zur Ermittlung der Konzentration, eines Volumenanteils, eines Masseanteils oder eines Partialdrucks zumindest einer Komponente eines mehrkomponentigen Messmediums; aufweisen.

Die Auswerteeinheit kann vorzugsweise eine Speichereinheit aufweisen oder mit einer solchen kommunizieren. Auf dieser Speichereinheit sind Datensätze abgelegt, welche im Zusammenspiel mit den gemessenen Werten des ersten und des zweiten Sensors eine Ermittlung der Konzentration, eines Volumenanteils, eines Masseanteils oder eines Partialdrucks zumindest einer Komponente eines mehrkomponentigen Messmediums ermöglichen. Dies kann beispielsweise mittels einer Recheneinheit erfolgen, die Teil der Auswerteeinheit ist.

Fig. 1　　Perspektivansicht eines ersten erfindungsgemäßen Massedurchflussmessgerät;
Fig. 2　　Draufsicht auf ein erstes Bauteil des erfindungsgemäßen Massedurchflussmessgeräts;
Fig. 3　　Detailansicht eines ersten Sensors zur Bestimmung von thermischphysikalischen Eigenschaften eines Messmediums;
Fig. 4　　Detailansicht eines zweiten Sensors, welcher vibriert und am ersten Bauteil angeordnet ist;
Fig. 5　　Explosionsdarstellung des Massedurchflussmessgerätes;
Fig. 6　　Perspektivansicht des ersten Bauteils;
Fig. 7　　Explosionsdarstellung eines zweiten erfindungsgemäßen Massedurchflussmessgerätes;
Fig. 8　　Perspektivansicht eines ersten Bauteils des zweiten Massedurchflussmessgerätes;
Fig. 9　　Schnittansicht des zweiten Massedurchflussmessgerätes;
Fig. 10　　Draufsicht auf das erste Bauteil des zweiten Massedurchflussmessgerätes;

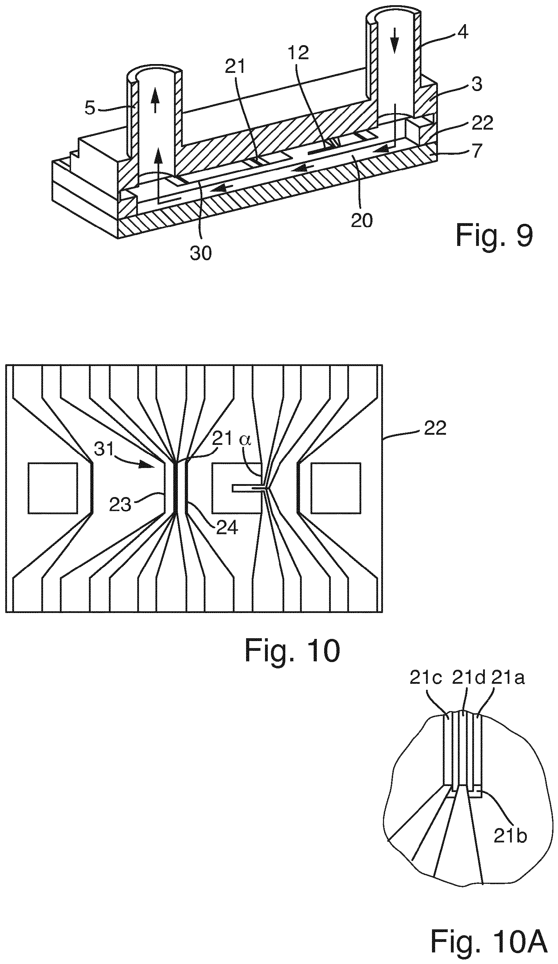

Fig. 10　　A Detailansicht eines ersten Sensors zur Bestimmung einer thermischphysikalischen Eigenschaft;

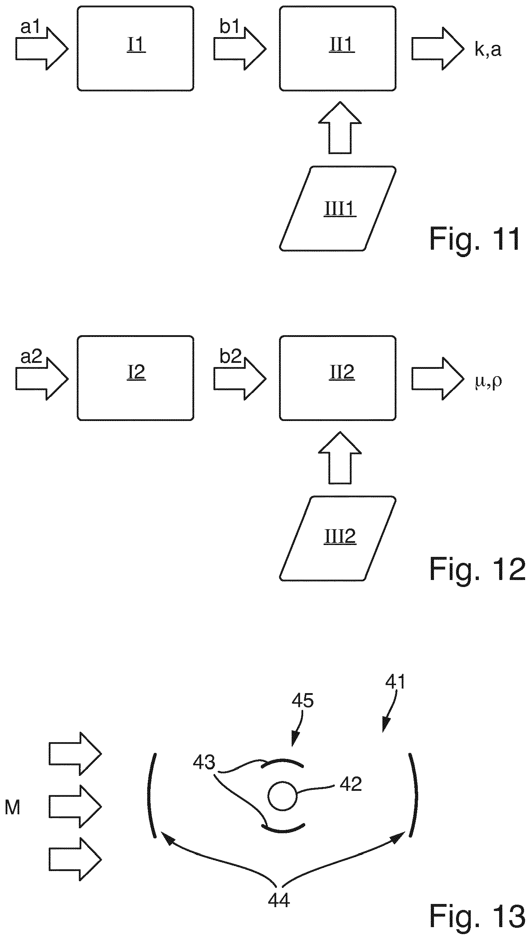

Fig. 11　　Ablaufdiagramm bezüglich der Arbeitsweise des ersten Sensors;
Fig. 12　　Ablaufdiagramm bezüglich der Arbeitsweise des zweiten Sensors;
Fig. 13　　Detailansicht einer Anordnung von Sensorelementen eines ersten Sensors einer dritten Massendurchflussmessgerätes;

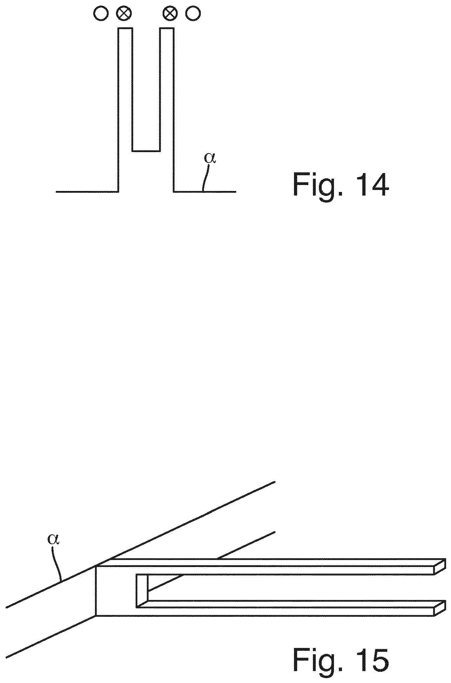

Fig. 14　　Darstellung eines zweiten Sensors eines vierten Massendurchflussmessgerätes;
Fig. 15　　Darstellung eines zweiten Sensors eines fünften Massendurchflussmessgerätes; und

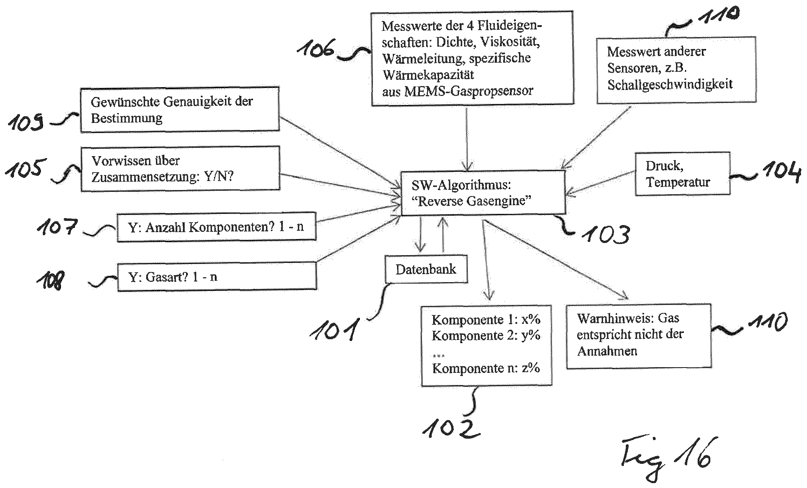

Fig. 16　　Darstellung eines Flussdiagramms welches eine Umsetzung der Betriebsweise eines erfindungsgemäßen Massendurchflussgerätes darstellt.

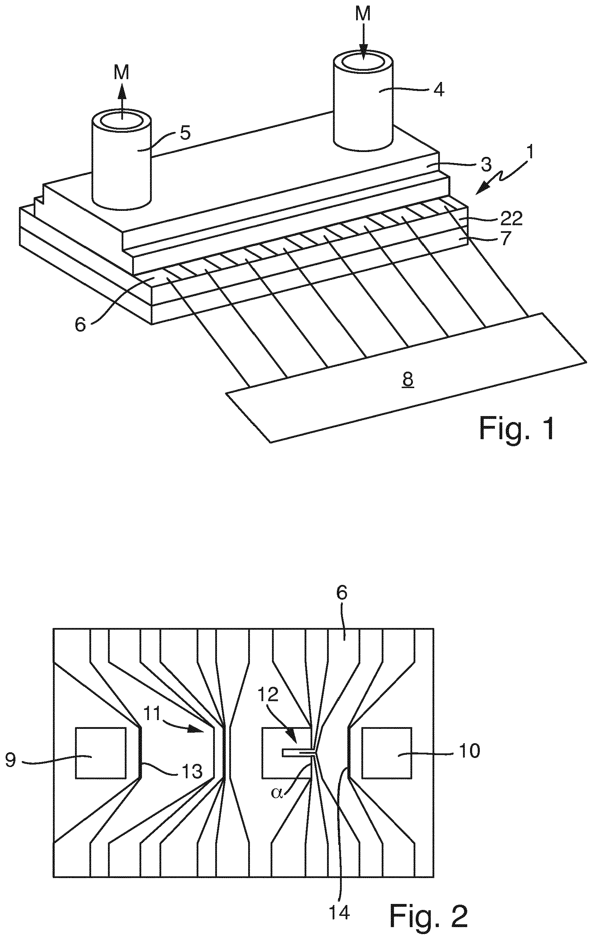

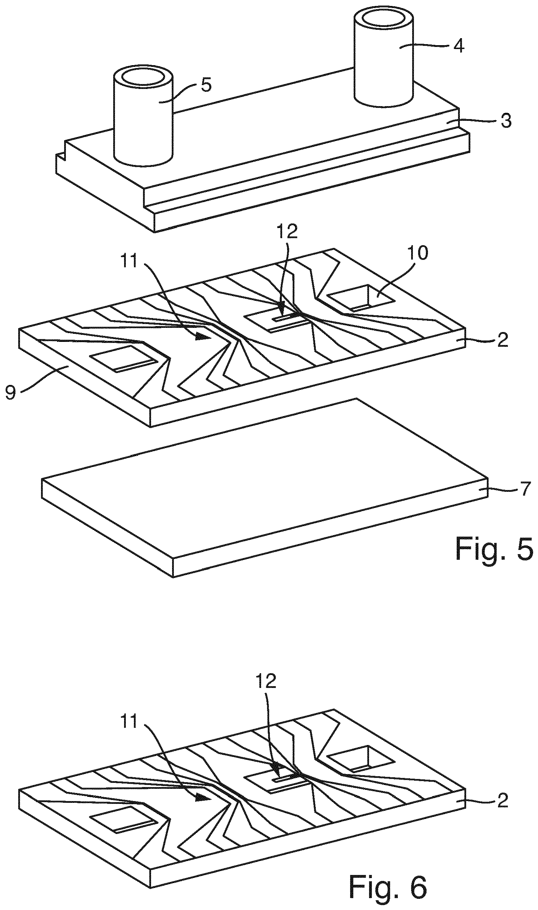

Fig. 1-6 zeigt ein Ausführungsbeispiel eines ersten erfindungsgemäßen Massendurchflussmessgerätes 1. In diesem Ausführungsbeispiel umfasst das Massendurchflussmessgerät 1 ein erstes Bauteil 2, welches in kompakter Art und Weise als ein monolithisches Bauteil ausgebildet ist. Dieses monolithische Bauteil ist vorzugsweise ein mehrlagiger Chip, in welchen die jeweiligen Funktionslagen mittels eines Ätzverfahrens eingebracht sind.

Das Massendurchflussmessgerät 1 weist darüber hinaus noch ein zweites Bauteil 3 auf, welches auf das erste Bauteil 2 aufgesetzt und mit diesem verbunden ist. Die Verbindung zwischen dem ersten und dem zweiten Bauteil 2 und 3 ist dabei vorzugsweise druckstabil insbesondere bei Drücken von mehr als 3 bar und weist ebenfalls vorzugsweise eine gute Temperaturwechselbeständigkeit bei Temperaturunterschieden von vorzugsweise mehr als 100 Kauf. Das erste Bauteil 2 kann als Substratmaterial genutzt werden und aus Keramik, Metall oder Kunststoff bestehen, wobei der Temperaturausdehnungskoeffizient des vorgenannten Materials vorzugsweise nahe beim Temperaturausdehnungskoeffizienten des Materials des zweiten Bauteils liegt. Insbesondere kann Quarz oder Silicium gewählt werden. Entsprechend geeignete Materialkombinationen sind dem Fachmann aus dem Bereich der MEMS-Technologie hinreichend bekannt.

Das erste Bauteil 2 bildet in Verbindung einem dritten Bauteil 7 und mit dem zweiten Bauteil einen im Massendurchflussgerät 1 integrierten Messkanal aus, welcher analog zu dem in Fig. 9 dargestellten Messkanal 20 ausgebildet ist und durch welchen ein Messmedium M zu Sensoren 11 oder 31 und 12 hingeleitet wird. Diese Sensoren 11 oder 31 und 12 sind im vorliegenden Ausführungsbeispiel auf ein- und demselben ersten Bauteil 2 angeordnet. Es ist jedoch im Rahmen der Erfindung auch möglich, dass die Sensoren auf mehreren Bauteilen angeordnet sind. Der Messkanal weist eine Mediumszuführung 4 und eine Mediumsabführung 5 auf, mit welchen ein Messmedium M dem Messkanal 20 zu- oder abgeführt wird. Diese Mediumszuführung und -abführung sind auf dem zweiten Bauteil 3 angeordnet.

Das zweite Bauteil und das dritte Bauteil können aus dem gleichen Material bestehen wie das erste Bauteil. Dabei ist das dritte Bauteil 7 mit dem ersten Bauteil 1 ebenfalls druckfest und temperaturstabil verbunden. Aus Fig. 1 ist ersichtlich, dass die Oberfläche des ersten Bauteils 2 Kontakte 6 aufweist. Die Oberfläche des ersten Bauteils 2 steht seitlich unter dem zweiten Bauteil 3 hervor, so dass die Kontakte 6 zugänglich sind. An diesen Kontakten können Leitungen angeschlossen werden, welche zu einer Auswerteeinheit 8 des Massendurchflussmessgerätes 1 führen. Dies ist in Fig. 1 lediglich schematisch angedeutet. Die Auswerteeinheit übernimmt die Bestimmung und Berechnung der Ausgabewerte bezüglich der Eigenschaften des Messmediums und des Massendurchflusses aus den von den Sensoren 11 oder 31 und 12 gemessenen Werten.

Fig. 2 zeigt eine Draufsicht auf die Oberseite des ersten Bauteils 2. Die Rückseite des Bauteils weist eine Ausformung für den Messkanal auf. Man erkennt die zum Messkanal führenden Durchführungen 9 und 10 durch welche das Messmedium M in den unterhalb des ersten Bauteils 2 befindlichen Messkanal geführt wird. Dieser Messkanal ist in das erste Bauteil eingebracht, beispielsweise durch Fräsen oder Ätzen, so dass die Sensorelemente 11 oder 31 und 12 direkt im Kontakt mit dem Messmedium stehen oder durch eine dünne Materiallage vor chemischen oder mechanischen Beschädigungen geschützt sind. Alternativ kann der Messkanal auch im zweiten Bauteil 3 eingebracht sein, so dass das Medium von der Seite des zweiten Bauteils 3 über die Sensoren 11 oder 31 und 12 geleitet wird.

Das erste Bauteil 2 weist zumindest einen ersten Sensor 11 oder 31 auf. Dieser Sensor 11 oder 31 dient der Ermittlung von thermisch-physikalischen Eigenschaften des Mediums. Diese Eigenschaften sind beispielsweise die Wärmeleitfähigkeit (thermal conductivity) des Mediums. Es kann allerdings zusätzlich auch die Temperaturleitfähigkeit (thermal diffusivity) des Mediums ermittelt werden. Bei ermittelter oder vorgegebener Dichte kann auch die spezifische Wärmeleitfähigkeit durch den Sensor ermittelt werden.

Das Massendurchflussmessgerät 1 weist zudem zumindest einen zweiten Sensor 12 auf. Dieser Sensor 12 ist vibrierend. Durch diesen Sensor 12 können Mediumseigenschaften ermittelt werden. Dabei handelt es sich vorzugsweise um die Dichte und die Viskosität.

Der vorgenannte zweite Sensor 12 kann besonders bevorzugt zusammen mit dem ersten Sensor 11 oder 31 in ein und demselben Bauteil 2 vorgesehen sein. Dies gewährleistet eine einfache Herstellung und eine kompakte Bauweise des Massendurchflussmessgerätes. Miniaturisierte Massendurchflussmessgeräte sind dadurch realisierbar. Dabei ist der Mediumskanal nicht durch ein Messrohr gebildet, sondern er ist ein integraler Bestandteil des Massendurchflussmessgerätes. Das heißt der Mediumskanal ist im Material eines der Bauteile 2 oder 3, insbesondere im Material des zweiten Bauteils 2, eingebracht oder er wird durch das Zusammenführen mehrerer Bauteile, hier der ersten, zweiten und dritten Bauteile 2, 3 und 7 ausgebildet.

Das in Fig. 1-6 abgebildete Durchflussmessgerät kombiniert einen ersten Sensor 11 oder 31 zur Bestimmung von thermisch-physikalischen Eigenschaften eines Messmediums mit einem zweiten vibrierenden Sensor 12, welcher als als Viscometer funktioniert.

Entsprechende vibrierende Sensoren können vorzugsweise als sogenannte Cantilever ausgebildet sein. Cantilever welche nach dem Prinzip eines Viscometers arbeiten sind an sich schon bekannt. Ein Cantilever ist ein Vorsprung bzw. ein hervorstehendes Segment, welches in Vibrationen versetzt wird. Die Vibrationen können durch piezoelektrische Anregung, elektromagnetische Anregung oder elektrostatische Anregung erzeugt werden.

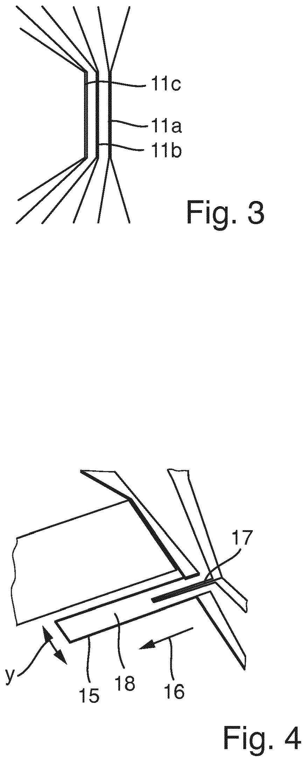

Vibrationsviscometer beruhen auf dem Prinzip des Bedämpfens eines oszillierenden elektromechanischem Resonators, welcher in ein Medium gehalten wird, dessen Viskosität ermittelt werden soll. Der Resonator sendet dabei durch Torsion verursachte Schwingungen aus oder transversale Schwingungen. Letztere können durch den in Fig. 4 dargestellten Cantilever-Arm erzeugt werden. Je höher die Viskosität, umso höher ist die Bedämpfung des Resonators. Die Bedämpfung des Resonators kann auf unterschiedliche Weise gemessen werden. So kann die Leistungszufuhr ermittelt werden, welche benötigt wird, um den Resonator bei einer konstanten Amplitude schwingen zu lassen. Es kann auch die zeitliche Verzögerung der Signale ermittelt werden, sofern der Resonator ausgeschalten ist.

Eine weitere Möglichkeit der Messung ist die Frequenzermittlung des Resonators als Funktion eines Phasenwinkels zwischen angeregten und empfangenen Wellenformen. Je höher die Viskosität, umso höher ist der Frequenzwechsel für einen gegebenen Phasenwechsel.

Zusätzlich zur Viskosität kann durch den Cantilever auch die Dichte des Messmediums bestimmt werden. Somit ermittelt auch der vibrierende Sensor physikalische Eigenschaften des Messmediums. Wie in Fig. 1-6 gezeigt, ist es möglich den ersten und den zweiten Sensor auf ein und demselben monolithischen Chip anzuordnen. Dieser Chip kann in MEMS-Bauweise (Microelectromechanical systems) ausgeführt sein.

In den speziellen Ausführungsbeispielen der Fig. 1-10 wird die Anregung des Cantilevers 18 durch eine elektromagnetische Anregung mittels eines Magnetfeldes, z.B. eines axialen Magnetfeldes, vorzugsweise erzeugt durch eine nicht-näher dargestellte Spule oder zumindest einen Dauermagnet, erzeugt. Entsprechende Spulen, welche z.B. auf einer Leiterplatte geprintet vorliegen sind z.B. aus der DE 10 2012 102 979 A1 bekannt. Der Aufbau des Cantilevers ist in Fig. 2 B im Detail dargestellt. Man erkennt einen AC-Leiterschleife 15, welche bevorzugt an der Außenseite des Cantilevers angeordnet ist und ein senkrecht dazu ausgerichtetes Magnetfeld 16. Fließt nun am Cantilever 18 ein Messmedium, beispielsweise ein elektrisch-leitendes Medium vorbei, so wird der Cantilever in Schwingungen versetzt. Der Cantilever weist zudem einen Widerstand 17, vorzugsweise einen Piezowiderstand, auf, welcher sich je nach Amplitude der Schwingungen des Cantileverarms ändert. Der Piezowiderstand kann vorzugsweise als einteiliges Element, z.B. als einteilige Brücke, ausgestaltet sein oder als eine Brücke mit vier piezoresistiven Widerständen. Durch die AC-Anregung wird der Cantileverarm in Schwingungen Y versetzt. Diese Schwingungen werden je nach Viskosität des Messmediums unterschiedlich stark gedämpft. Diese Dämpfung kann über den Piezowiderstand erfasst werden. Dieses Prinzip ist in Fig. 4 im Detail dargestellt.

Der Cantilever ist dabei in einem rechteckigem Freiraum angeordnet und ist an dessen Seitenwandung $\alpha$ zum ersten Bauteil hin angebracht.

Durch das Massendurchflussgerät können zumindest fünf physikalische Eigenschaften des Mediums ermittelt werden. Dies betrifft insbesondere die Wärmeleitfähigkeit K, die Temperaturleitfähigkeit a, die Viskosität $\mu$, die Dichte $\rho$ und die spezifische Wärmekapazität $\rho c_p$ des Mediums. Mittels dieser Größen kann der thermische Massendurchfluss ermittelt und Störungen teilweise oder vollständig kompensiert werden.

Eine Beschreibung des Messverfahrens des zweiten Sensors ist in Fig. 12 dargestellt. Der zweite Sensor I.2 wird dabei in einem Anregungsschritt a2 durch beispielsweise eine elektromagnetische Anregung in Schwingungen versetzt. Diese Schwingungen in das Messmedium eingebracht und es werden je nach Eigenschaften des Messmediums Messwerte als Antwort auf die Anregung ermittelt. Die Messwerte können beispielsweise in Form eine Spannungssignals b2 in Abhängigkeit von den Dämpfungseigenschaften des Mediums auf die Schwingungen durch die Auswerteeinheit II.2 und unter Zuhilfenahme eines mathematisch-physikalischen Modells II.3 in physikalische Größen zur Beschreibung der Eigenschaften des thermisch-physikalischen Messmediums umgewandelt. Diese sind die Viskosität und/oder die Dichte des Messmediums.

Das erste Bauteil 2 weist zudem eine Metall-Lage 30 auf. Diese ist kleiner als $10 \mu m$, vorzugsweise jedoch kleiner oder gleich $6 \mu m$. Aus diesem Film sind einzelne Segmente des ersten und/oder des zweiten Sensors 11 oder 31 und 12 sowie deren Kontakte 6 herausgebildet. Die Anordnung der Sensoren wurde auf die Anforderungen dahingehend optimiert, dass sie einfach integrierbar sind in ein Durchflussmessgerät mit einem integrierten Messkanal. Insbesondere im klein-dimensionierten Bereich von Durchflussmessgeräten sind solche optimierten Anordnungen bei der Messung von Mikrofluiden von Vorteil.

Neben einer Kostenersparnis kann auch eine schnellere Messung bei einem oder mehreren sich verändernden Medien oder eine sich verändernde Mediumszusammensetzung erfolgen.

Ein entsprechender Sensor kann vorzugsweise eine mediumszugewandte Oberfläche von weniger als $10 \ cm^2$ aufweisen und eine Sensordicke von weniger als 0,5 cm aufweisen. Der Messkanal hat dabei vorzugsweise einen mittleren Durchmesser von weniger als 2mm.

Das Durchflussmessgerät ist als thermisches Massendurchflussmessgerät ausgebildet. Dabei ermöglicht der erste Sensor 11 die Ermittlung des Massendurchflusses. Hierfür weist dieser Sensor verschiedene Sensorelemente auf.

Thermische Durchflussmessgeräte verwenden üblicherweise zwei möglichst gleichartig ausgestaltete beheizbare Sensorelemente, die in thermischem Kontakt mit dem durch den Messkanal 20 strömenden Medium sind. Eines der beiden Sensorelemente ist ein sogenanntes aktives Sensorelement, das mittels einer Heizeinheit beheizt wird.

Dieses aktive Sensorelement wird nachfolgend als Heizer 11 b, 21 bezeichnet. Als Heizeinheit ist entweder eine zusätzliche Widerstandsheizung vorgesehen, oder bei dem Sensorelement selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Bei dem zweiten der beiden weiteren Sensorelemente handelt es sich um ein sog. passives Sensorelement 11a, 11c, 23 und 24: Es misst die Temperatur des Mediums und ist vorzugsweise in der Nähe des aktiven Sensorelements, des sog. Heizers, angeordnet. Darüber hinaus kann auch ein drittes Sensorelement als passives Sensorelement vorgesehen sein, welches ebenfalls in der Nähe des Heizers angeordnet ist. Idealerweise wird daher eine Abfolge der Sensorelemente in Strömungsrichtung bereitgestellt, welche aus dem zweiten Sensorelement 11a, 24, dem Heizer 11b, 21 und dem dritten Sensorelement 11c, 23 besteht. Somit sind die jeweils passiven Sensorelemente in Strömungsrichtung beidseitig zum Heizer 11b, 21 positioniert. Die passiven Sensorelemente können symmetrisch, also im gleichen Abstand zum Heizer, angeordnet sein. Besonders vorteilhaft ist jedoch eine assymmetrische Anordnung der beiden passiven Sensorelemente gegenüber dem Heizer. Um eine höhere Sensitivität zu erhalten, können auch Thermistoren als passive Sensorelemente verwendet werden. Der Heizer bzw. dessen Einzelelemente kann vorzugsweise aus Chrom, Nickel und/oder Platin hergestellt werden. Es sind allerdings auch andere Materialien bekannt, welche als beheizbare Elemente in Frage kommen.

Üblicherweise wird in einem thermischen Durchflussmessgerät ein beheizbares Sensorelement so beheizt, dass sich eine feste Temperaturdifferenz zwischen den beiden Sensorelement einstellt. Alternativ ist es auch bekannt geworden, über eine Regel-/Steuereinheit eine konstante Heizleistung einzuspeisen.

Tritt in dem Messkanal 20 kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Sensorelements wesentlich von dem Massedurchfluss des vorbeiströmenden Mediums abhängig. Da das Medium kälter ist als das beheizte Sensorelement, wird durch das vorbeiströmende Medium Wärme von dem beheizten Sensorelement abtransportiert. Um also bei einem strömenden Medium die feste Temperaturdifferenz zwischen den beiden Sensorelementen aufrecht zu erhalten, ist eine erhöhte Heizleistung für den beheizten Sensorelement erforderlich. Die erhöhte Heizleistung ist ein Maß für den Massedurchfluss bzw. den Massestrom des Mediums durch den Messkanal.

Wird hingegen eine konstante Heizleistung eingespeist, so verringert sich infolge des Durchflusses des Mediums die Temperaturdifferenz zwischen den beiden Sensorelementen. Die jeweilige Temperaturdifferenz ist dann ein Maß für den Massedurchfluss des Mediums durch den Messkanal.

Es besteht somit ein funktionaler Zusammenhang zwischen der zum Beheizen des Sensorelements notwendigen Heizenergie und dem Massedurchfluss durch eine Rohrleitung bzw. durch den Messkanal. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt.

Durch die Nähe des zweiten und dritten Sensorelements 11c und 11a zum Heizer 11b wird es zudem möglich ein Strömungsprofil zu ermitteln.

Zusätzlich zu den beiden Sensoren 11 oder 31 und 12 weist das Durchflussmessgerät optional einen dritten und/oder einen vierten Sensor 13, 14 auf. Diese optionalen dritten und vierten Sensoren können beispielsweise aus Nickel bestehen. Im vorliegenden Ausführungsbeispiel sind beide Sensorelemente 13 und 14 räumlich voneinander getrennt auf dem ersten Bauteil 2 im Bereich der Mediumsabführung 5 und Mediumszuführung 4 angeordnet. Sie messen die Mediumstemperatur ohne Beeinflussung durch den Wärmeeintrag durch den Heizer 11b, 21.

Eine Beschreibung des Messverfahrens ist in Fig. 11 dargestellt. Der Heizer wird dabei in einem Anregungsschritt a1 mit einem AC und DC-Signal angeregt. Dieses in das Messmedium eingebracht und es werden je nach Eigenschaften des Messmediums Messwerte als Antwort auf die Anregung ermittelt. Dies erfolgt durch den ersten Sensor I.1. Die Messwerte in Form eines Temperatursignals b1 mit Amplituden und Phasen, genauer gesagt mit der Amplitude und der Phase eines Temperatursignals, werden durch die Auswerteeinheit II.1 und unter Zuhilfenahme eines mathematisch-physikalischen Modells III.1 in physikalische Größen zur Beschreibung der Eigenschaften des thermisch-physikalischen Messmediums umgewandelt. Diese sind die thermische Wärmeleitfähigkeit und/oder die Temperaturleitfähigkeit.

Die Temperatur des Mediums wird sowohl an den passiven Sensorelementen 11a, 11c, 23, 24 und/oder am Heizer 11b, 21 als Widerstandswerte oder als Spannungswerte ermittelt. Diese Temperatur-Messpunkte des Temperatursignals variieren und weisen daher eine Amplitude und eine Phase auf. Die Phase ist als ein Zeitversatz anzusehen, wobei das T-Signal gleich bleibt. Dieses Verhalten der Temperatur-Signale weist einen periodischen Verlauf auf, hervorgerufen durch die AC-Anregung des Heizers.

Aufgrund der Amplituden und der Phasen des Temperatursignals und dem Systemaufbau kann die Wärmeleitfähigkeit und die thermische Diffusivität des umgebenden Mediums ermittelt werden. Dies geschieht in Abhängigkeit der Dimensionierung des Sensors und der einzelnen Sensorelemente zueinander. Somit trägt eine besonders bevorzugte Anordnung der Sensorelemente zueinander zu einer besseren Ermittlung der vorgenannten thermisch-physikalischer Parameter bei.

Die beiden Ausführungsbeispiele der Fig. 1-4 und Fig. 5-8 sind in einer Vielzahl von Merkmalen identisch. Der Unterschied zwischen den beiden Ausführungsbeispielen ergibt sich vorrangig aus der Gestaltung und Betriebsweise des ersten Sensors, welcher zur Bestimmung der thermisch-physikalischen Eigenschaften genutzt wird.

Die beiden Ausführungsvarianten zeigen jeweils die Ausgestaltung eines Sensors für Massedurchflussmessgeräte. Der Sensor kann allerdings auch zur reinen Eigenschaftsbestimmung eines Mediums genutzt werden. Die Arbeitsweise soll nachfolgend bezüglich des ersten Sensors 11 oder 31, welcher zur Ermittlung der thermisch-physikalischen Eigenschaften bestimmt ist, näher beschreiben werden.

Der in Fig. 1-6 abgebildete erste Sensor kann als ein Sensor 11 mit einem temperaturabhängigen Heizer beschrieben werden. Dieser arbeitet als Temperaturmesser. In dieser Anordnung umfasst der Heizer 11b ein Heizelement, welches zugleich eine Temperaturmessung auf der dritten Frequenz durchführt. Die AC-Rückmeldung des Heizers, die Wärmeleitfähigkeit K und die spezifische Wärmekapazität $\rho c_p$ des Mediums können bestimmt werden. Dies kann anhand der 3omega Methode erfolgen.

Die **3-Omega-Methode** ist eine Messmethode zur Bestimmung der Wärmeleitfähigkeiten von Medien, insbesondere von Gasen oder Flüssigkeiten. Hierbei wird der auf das erste Bauteil aufgebrachte Heizer 11b periodisch erwärmt und die dadurch entstehenden Temperaturoszillationen gemessen. Aus deren Frequenzabhängigkeit können die Wärmeleitfähigkeit und thermische Diffusivität des Messmediums bestimmt werden.

Die 3-Omega-Methode ist an sich bekannt. Auf drei unterschiedlichen Frequenzen kann eine Signal- und/oder Energieübertragung erfolgen.

Ausgehend von der 3-Omega Methode kann auf einer Frequenz ein Strom oder eine stromäquivalente Spannung zum Betreiben des Heizelements übertragen werden.

Eine zweite Frequenz kann die übertragene Wärme oder die dazu benötigte Leistung übermittelt werden.

Auf einer dritten Frequenz kann die gemessene Temperatur übermittelt werden.

$$V(t) = I(t) * R(t)$$

$$= I_0 * R_0 * \left[\cos\left(\frac{1}{2} * w * t\right) + \left(\frac{1}{2} * \alpha * T_w * \cos\left(\frac{1}{2} * w * t - \varphi\right) + \frac{1}{2} * \alpha * T_w\right.\right.$$

$$\left.\left. * \cos\left(\frac{3}{2} * w * t - \varphi\right)\right]\right.$$

, wobei $\omega$ die Kreisfrequenz repräsentiert und $I_0$ die zugeführte Stromstärke darstellt. t beschreibt die Heizdauer und wobei $\varphi$ die Phasenverschiebung repräsentiert. $T_w$ beschreibt die Amplitude der Temperatur am Messpunkt Aus dieser Formel geht der dreifache Frequenzterm hervor.

Im vorliegenden Fall kann für die Ausgestaltung des Sensors in Fig. 1-6 kann die Temperaturdifferenzermittlung der -temperatursensoren str anhand des DC-Signals erfolgen, welches genutzt werden kann zur Berechnung des Durchflusses und/oder der Durchflussgeschwindigkeit des Mediums nach dem kalorimetrischen Messprinzip.

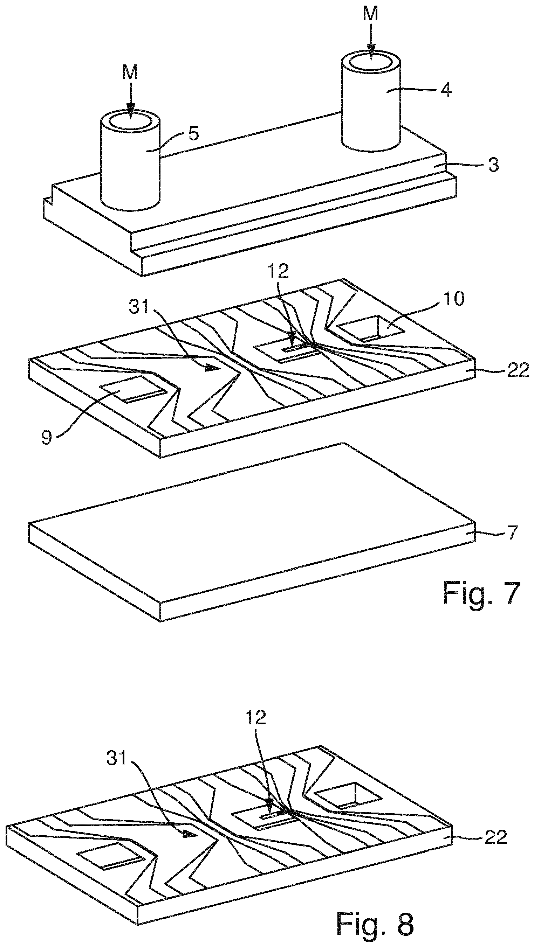

Im Fall der Fig. 7-10 arbeitet der Heizer 21 temperaturunabhängig. Er besteht aus einem Heizelement 21A, 21B, 21C und einem oder mehreren Temperatursensorelementen 21D. Das Heizelement 21 kann dabei nicht alleine als Sensor fungieren, sondern nur in Verbindung mit dem zusätzlichen Temperatursensorelement 21D. In diesem Fall erkennt man aus Fig. 10A, dass das Heizelement um das Temperatursensorelement herum angeordnet ist. Das Heizelement kann aus zwei länglichen Segmenten 21A und 21C und einer Überbrückung 21B bestehen, wie dies ebenfalls aus Fig. 10a erkennbar ist.

Durch diese Anordnung wird es dem Temperatursensorelement 21D ermöglicht, die Temperatur des Mediums so nah wie möglich am Heizelement zu ermitteln. Wie bereits erläutert, wird die AC-Rückantwort dieses Temperatursensorelements 21D genutzt zur Bestimmung der Wärmeleitfähigkeit K und die spezifische Wärmekapazität $\rho c_p$ des Mediums. Obgleich diese Anordnung gegenüber der Variante aus Fig. 1-6 zunächst als aufwendiger in seiner Herstellung erscheint, so weist diese Anordnung einen geringeren Messaufwand auf, da bei dieser Anordnung keine so hohe Frequenz benötigt wird. Da das AC-Signal in der Anregungsfrequenz (omega) genutzt werden kann zur Messung, ist dieses Signal darüber hinaus stärker als das Signal der 3-omega Methode.

Der Durchfluss kann wie im vorhergehenden Beispiel durch Ermittlung der Temperaturdifferenz anhand der strömungsaufwärtig und strömungsabwärtig vom Heizer 31 angeordneten passiven Sensorelemente 23 und 24 erfolgen. Der Heizer 21 und die beiden passiven Sensorelemente 23 und 24bilden in diesem Fall gemeinsam den ersten Senors 31.

Dabei erfolgt die Durchflussermittlung anhand des DC-Messsignals basierend auf dem Kalorimetrischen Messprinzip.

Weitere alternative Designanordnungen der einzelnen Sensorelemente, also der passiven Sensorelemente und/oder des Heizers sind denkbar und können durch entsprechende Designs ausgestaltet werden.

Ein alternatives Ausführungsbeispiel für eine entsprechende Designabwandlung ist in Fig. 13 dargestellt.

Fig. 13 zeigt lediglich schematisch eine alternative eines ersten Sensors für ein Massendurchflussmessgerät. Dieser Sensor weist ein ringförmiges Heizelement 42 als Teil eines temperaturunabhängigen Heizers 45 auf. Dieser Heizer 45 weist zusätzlich zum Heizelement 42 zwei bogenförmige Temperatursensorelemente 43 auf. Dabei sind auch in diesem Fall die Temperatursensorelemente 43 des Heizers 45 sehr nahe am Heizelement 42 angeordnet. Folglich ist der Heizer als aktives Sensorelement auch in diesem Fall aus einem Heizelement und einem oder mehreren Temperatursensorelementen aufgebaut. Der Heizer dient dabei zur Bestimmung der bereits erwähnten thermisch-physikalischen Eigenschaften des Mediums. Die Temperatursensorelemente 43 werden asymmetrisch positioniert, vertikal zur Strömungsrichtung und nahe zum Heizelement 42, um soweit wie möglich den Einfluss der Strömung auf die Messung zu verringern. Durch Messung der Amplitude und der Phase des AC-Temperatursignals kann eine Kalkulation der Wärmeleitfähigkeit und der spezifischen Wärmekapazität des Mediums erfolgen.

Darüber hinaus weist der erste Sensor zusätzlich zum Heizer 45 zwei bogenförmige passive Sensorelemente 44 auf. Diese dienen zur Bestimmung der Durchflussgeschwindigkeit oder des Durchflusses eines Messmediums M. Die strömungsaufwärtig und strömungsabwärtig zum Heizer 45 angeordneten Sensorelemente 44 ermöglichen die Bestimmung des Durchflusses und/oder der Durchflussgeschwindigkeit.

Der zweite Sensor 12 kann ebenfalls unterschiedliche Ausgestaltungsvarianten aufweisen. Fig. 14 zeigt zwei miteinander verbundene Cantilever, welche außerhalb einer Ebene die entlang der Längsachse des Sensor verläuft und senkrecht zur Wandung $\alpha$ (wie in Fig. 2 und 10 dargestellt) verläuft, schwingen können. Alternativ können die Cantilever-Arme auch, wie in Fig. 15 gezeigt, übereinander angeordnet sein, ausgehend von der Seitenansicht des Massendurchflussmessgerätes, wobei der Cantilever an der Wandung a, wie in Fig. 2 und 10 dargestellt, festgelegt ist. Dadurch verhält sich der Sensor wie eine Stimmgabel. Die Schwingungsanregung kann durch elektromagnetische Anregung, piezoelektrische Anregung, thermische Anregung (bei bipolarem Verhalten) oder elektrostatische Anregung erfolgen.

Zusätzlich oder alternativ zu Cantilever-Elementen können auch planar-vibrierende Sensorelemente genutzt werden. Diese Sensorelemente können innerhalb der Ebene des ersten Bauteils bzw. innerhalb der Sensorchipebene schwingen.

Der detektierende Teil des zweiten Sensors kann vorzugsweise ein piezoresistiver Widerstand sein. Andere Mittel zur Detektion des Schwingungsausschlags des Sensors können ebenfalls verwendet werden, beispielsweise elektrostatische oder optische Mittel zur Detektion.

Die in Fig. 14 und 15 dargestellten Cantilever-Arme sind idealerweise miteinader in ihrer Eigenform gekoppelt. Das hat den besonderen Vorteil, dass keine Energieverluste zur Unterstützung der vibrierenden Sensorelemente auftreten.

Die Methode zur Ermittlung der thermisch-physikalischen Eigenschaften basiert auf dem kalorimetrischen Prinzip. Dieses kann beispielsweise erreicht werden mit den vorbeschriebenen Ausführungsvarianten des ersten Sensors, so z.B. wenn ein überlagerter DC-Strom dem Heizer zugeführt wird.

Die kalorimetrische Ermittlung kann durch Messung der Wärmemenge, welche vom Heizer generiert wird und durch die Messung der Temperaturdifferenz der passiven Sensorelemente strömungsaufwärtig und strömungsabwärtig vom Heizer erfolgen.

Dabei gelten folgende Zusammenhänge:

| Equation | | Principle |
|---|---|---|
| $\overline{T} = f_{th\cdot\ amp}(k, \rho * cp)$ | eq. 1 | Thermal Sensor amplitude (temperature) |
| $\Delta\varphi_{th} = f'_{th\cdot\ phase}(k, \rho * cp)$ | eq. 2 | Thermal Sensor Phase (temperature) |
| $\overline{w} = f_{visc\cdot\ amp}(\mu, \rho)$ | eq. 3 | Vibrating element amplitude (displacement) |
| $\Delta\varphi_{vib} = f'_{visc\cdot\ phase}(\mu, \rho)$ | eq. 4 | Vibrating element phase (displacement) |
| $\rho u = \dfrac{\dot{Q}_{heater}}{A c_p \Delta T_{up-do}}$ | eq. 5 | Calorimetric principle |

**Nomenklatur**

$\mu$        Dynamic viscosity [kg/ms]

| $\omega$ | Angular frequency [rad/s] |
|---|---|
| $\varphi$ | Phase [rad] |
| $c_p$ | Specific heat capacity |
| f | Frequency [Hz] |
| k | Thermal conductivity [W/mK] |
| 1 | Characteristic length [m] |
| $\dot{Q}_{heater}$ | Heat flow [W] |
| $\rho$ | Density[kg/m$^3$] |
| u | Flow velocity [m/s] |
| T | Temperature [K] |
| w | Displacement [m] |
| $\overline{\overline{T}}$ | Temperature amplitude [K] |
| $\Delta\varphi_{th}$ | Temperature phase shift [rad] |
| $\overline{w}$ | Displacement amplitude [m] |
| $\Delta\varphi_{vib}$ | Phase shift of vibrating element between excitation and displacement |

Durch die vorgenannten Zusammenhänge gelingt es ein System mit 5 Unbekannten, die Temperaturleitfähigkeit k , die Viskosität $\mu$, die Dichte $\rho$, die-spezifische Wärmekapazität $c_p$ des Mediums und die Geschwindigkeit zu ermitteln. Alle weiteren Konstanten werden durch Messung ermittelt oder sind Konstanten.

Ausgehend von diesen Zusammenhängen gelingt eine gasunabhängige thermische Durchflussmessung, da eine Selbstkorrektur erfolgen kann. Dies ist insbesondere bei einem Mediumswechsel oder bei einer Änderung der Medienzusammensetzung von Vorteil.

Um den Massendurchfluss pu aus der oben-genannten Funktion 5 zu ermittelt, sollte die Wärmekapazität $c_p$ ermittelt werden um eine Selbstkorrektur des Massendurchflusses zu erreichen. Dies kann durch Lösung der Funktionen 1-4 erfolgen. Durch Lösung der oben genannten Funktionen können die Werte von vier Eigenschaften ermittelt werden, welche zusätzliche Informationen bezüglich des Messmediums enthalten. Die Gleichungen 1-4 sind in allgemeiner Form dargestellt. Sie beschreiben die Frequenz-Antwort des ersten Sensors und des zweiten Sensors. Verschiedene Modelle wurden von unterschiedlichen Forschern angeboten, um diese Funktionen zu ermitteln. Die unterschiedlichen Modelle sind in den oben-genannten wissenschaftlichen Artikeln zum Stand der Technik näher erläutert, wobei auf diese Offenbarungsstellen ausdrücklich im Rahmen der Erfindung Bezug genommen wird.

Diese komplexen Modelle können in der oben dargestellten allgemeinen Form dargestellt werden.

Die in Fig. 1-15 dargestellten Massedurchflussmessgeräte weisen vorzugsweise eine nicht näher dargestellte Auswerteeinheit auf. In Fig. 16 ist ein Verfahrensschema angegeben, welches durch die Auswerteeinheit ausführbar ist. Die Auswerteeinheit muss nicht zwingend mechanisch mit dem Sensor verbunden sein, sondern kann auch von diesem abgesetzt sein und mit diesem, z.B. durch Kabelverbindung oder per Wireless-Verbindung oder dergleichen, kommunizieren.

Diese Auswerteeinheit greift auf eine Datenbank 101 zu. Diese ist auf einem innerhalb der Auswerteeinheit angeordneten Datenspeicher abgelegt. Alternativ kann es sich auch um einen externen Datenspeicher, z.B. auf einem externen Server, handeln, von welchem die Auswerteeinheit die Daten abruft bzw. mit welchem die Auswerteeinheit kommuniziert.

Die Auswerteeinheit kann über verschiedene Betriebsmodi verfügen, welche nachfolgend im Detail näher erklärt werden:

Ein erster Betriebsmodus ermöglicht zumindest die Konzentrationsangabe 102, den Massenanteil, den Volumenanteil und/oder den Partialdruck einer Komponente eines Gas- und/oder Flüssigkeitsgemisches oder Lösungen aus zumindest zwei oder mehr Komponenten.

Die Auswerteeinheit umfasst eine Recheneinheit 103, welche Zugriff auf die vorgenannte Datenbank hat. Die Datenbank umfasst zumindest einen Datensatz an physikalischen Fluideigenschaften für reine Gase und/oder Flüssigkeiten. Diese Datensätze umfassen zumindest zwei Fluideigenschaften ausgewählt aus der Dichte, der Viskosität, der thermischen Wärmeleitfähigkeit und/oder der spezifischen Wärmekapazität.

Sie kann jedoch auf alle vier vorgenannten Fluideigenschaften erweitert werden. Darüber hinaus kann der Datensatz auch Angaben der vorgenannten Fluideigenschaften bei unterschiedlichen Drücken und Temperaturen 104 umfassen. Weiterhin können auch Datensätze für zwei- oder mehrkomponentige Fluidgemische, also Flüssigkeits- und/oder Gasgemische oder für Lösungen, z.B. Salzlösungen, hinterlegt sein. So können z.B. bei binären Gasgemischen jeweils die Dichte, die Viskosität, die die thermische Wärmeleitfähigkeit, die spezifische Wärmekapazität und/oder die Temperaturleitfähigkeit für verschiedene Mischungsverhältnisse, z.B. 1:9, 2:8, 3:7, 4:6 und 5:5 aufweisen. Selbstverständlich ist ein ähnliches Vorgehen auch für ternäre oder quaternäre Flüssigkeits- und/oder Gasgemische vorstellbar.

Die vom Sensor ermittelten Messwerte 106, aus welchen die Dichte, die Viskosität, die thermische Wärmeleitfähigkeit, die spezifische Wärmekapazität und/oder die Temperaturleitfähigkeit des Fluidgemisches ermittelbar sind, werden vom Sensor an die Auswerteeinheit gesendet, in die vorgenannte Fluideigenschaften umgerechnet und mit denen in der Datenbank hinterlegten Datensätzen verglichen.

Bei Übereinstimmung der Messwerte oder den daraus berechneten Fluideigenschaften mit einem spezifischen Datensatz kann beispielsweise der Anteil oder die Konzentration der Komponenten angegeben werden.

Mit den vorbeschriebenen Sensoren kann insbesondere für Gaszusammensetzungen genutzt werden. So kann die Dichte, die Viskosität, die thermische Wärmeleitfähigkeit und die spezifische Wärmekapazität durch ein- und denselben Sensor ermittelt werden. Dies macht es besonders vorteilhaft möglich ohne zusätzliches Vorwissen direkt die Anteile bzw. Konzentrationen der Komponenten zu bestimmen.

Falls weniger Informationen bezüglich der Fluideigenschaften vom Sensor zur Verfügung gestellt werden oder um eine genauere Bestimmung zu ermöglichen, so können weitere Betriebsmodi gewählt werden.

Ein zweiter Betriebsmodus ermöglicht die Einbeziehung von Vorwissen 105. Es ist beispielsweise möglich, bereits in das Gerät alle oder einzelne in Frage kommenden Gaskomponenten des Gasgemisches vorzugeben. Die Auswerteeinheit kann in diesem Fall nur die Datensätze abfragen, in denen die entsprechenden Gaskomponenten vorhanden sind, wodurch die Auswertung genauer und mit geringeren Fehlern erfolgt.

Ein erster Unterbetriebsmodus des zweiten Betriebsmodus ermöglicht die Vorgabe der Anzahl der Komponenten 107. Dadurch kann z.B. die Auswerteeinheit bei geringen Störungen weitere Komponenten in dem Gasgemisch ausschließen.

Ein zweiter Unterbetriebsmodus des zweiten Betriebsmodus ermöglicht die Vorgabe der Art eines oder mehrerer Komponenten 108. Die Komponenten können z.B. Methan sein. In diesem Fall werden nur die Anzahl an Datensätzen mit Gasgemischen abgerufen, welche Methan als Komponente aufweisen.

In einem weiteren Betriebsmodus kann der Nutzer eine Konzentrationsvorgabe 109 einstellen, beispielsweise eine Minimalkonzentration an Kohlendioxid. Die Auswerteeinheit kann derart programmiert sein, dass eine Plausibilitätsabfrage erfolgt, sofern die durch Vergleich der Fluideigenschaften ermittelte Konzentration geringer ist als die Minimalkonzentration. In diesem Fall würde dies auf einen Fehler der Messung hindeuten und ggf. als Fehlermeldung 111 ausgegeben werden.

Mit den vorbeschriebenen Sensorvarianten ist es zudem möglich, die Temperatur des Fluidgemisches zu bestimmen. Diese ermittelte Temperatur kann vorzugsweise bei der Ermittlung der richtigen Datensätze berücksichtigt werden. Gleiches gilt für den Druck. Hierfür kann beispielsweise ein zusätzlicher Drucksensor vorgesehen sein.

Die Auswerteeinheit ermöglicht zudem eine Prozessregelung. So ist es beispielsweise möglich, sofern sich eine erste Komponente eines Gases ändert, auch die Konzentration der zweiten Komponente entsprechend zu regeln, z.B. über ein Druckregelventil, um so eine vom Nutzer vorgenommene Voreinstellung bzw. Vorgabe betreffend der Mindestkonzentration der zweiten Komponente zu erfüllen.

Ein Vergleich zwischen aus den Messwerten ermittelten Fluideigenschaften und den in der Datenbank abgelegten Datensätzen wird bereits ab zwei Fluideigenschaften theoretisch möglich, wobei die beiden Fluideigenschaften ausgewählt sind aus der Dichte, der Viskosität, der thermischen Wärmeleitfähigkeit, der Temperaturleitfähigkeit und/oder der spezifischen Wärmekapazität, oder daraus ableitbaren physikalischen Größen.

Die entsprechende Bestimmung der Anteile, Konzentrationen und/oder Partialdrücke kann sowohl unter Anwendung der idealen Gasgleichung erfolgen oder für reale Gase. Im letzeren Fall können mathematische Mischungsmodelle und entsprechende SoftwareProgramme genutzt werden, um die Berechnung zu vereinfachen.

Gegebenenfalls können auch zum Abgleich oder zur Verbesserung der Genauigkeit Messwerte anderer Sensoren 110, so z.B. die Schallgeschwindigkeit im Fluidgemisch ermittelt und bei der Konzentrationsberechnung berücksichtigt werden. Es ist bekannt, dass einzelne Ultraschall-Durchflussmessgeräte bereits Konzentrationen einiger Komponenten bestimmen können. Von der Anmelderin wird beispielsweise ein entsprechendes Messgerät unter dem Titel "Proline Prosonic B200" für die Biogasmessung verkauft.

Nachfolgend werden einige erfindungsgemäße Anwendungsfälle beschrieben, in welchem das erfindungsgemäße Messgerät eingesetzt werden kann. Dabei können in der jeweiligen erfindungsgemäßen Verwendung Mess-, Analyse- und/oder Detektionsgeräte ersetzt werden, welche nach anderen Messprinzipien arbeiten und teilweise wesentlich größer dimensioniert, teurer herstellbar oder störanfälliger sind. Alternativ kann das erfindungsgemäße Messgerät auch eingesetzt werden zur Überprüfung der Funktionsfähigkeit der bereits in den jeweiligen Anwendungen gebräuchlichen Messgeräten.

Das Messgerät kann erfindungsgemäß zur Konzentrationsbestimmung zumindest einer Komponente eines Gasgemisches mit bekannten Inhaltsstoffen eingesetzt werden. Das heißt, dass zwar bei dem entsprechenden Gasgemisch bekannt ist, welche Art an Komponenten in dem Gasgemisch (z.B. $CO_2$, Wasserdampf, Propan) enthalten sind jedoch nicht in welchem Anteil die jeweilige Komponente, z.B. Wasserdampf, in dem Gasgemisch enthalten ist. Dämpfe sind dabei auch als Gase zu verstehen, die Bestandteil des Gasgemisches sein können.

Bei dem vorgenannten Gasgemisch kann es sich bevorzugt um ein binäres und/oder tenäres Gasgemisch handeln.

Die eine Komponente ist vorzugsweise ein aliphatischer Kohlenwasserstoff mit einer Kettenlänge von weniger als 4 C-Atome, insbesondere Methan, ist. Viele Messgeräte können aliphatische Kohlenwasserstoffe - insbesondere im Beisein von Kohlenmonoxid oder Kohlendioxid - nicht hinreichend genau quantifizieren. Diese Messaufgabe ist bei dem vorliegenden neuartigen Messprinzip jedoch möglich.

Während sogenannte "Gasanalysatoren" sehr groß ausgestaltet sind und teilweise Stoffanteile jeweils nur einer Komponente eines Gasgemisches bestimmen können, ermöglicht das vorliegende Messgerät die Bestimmung der Konzentrationen aller Komponenten des tenären Gasgemisches.

Das Messgerät kann insbesondere zur Bestimmung des Methananteils in einem methanhaltigen Gasgemisch, insbesondere in Erdgas, Deponiegas, Biogas und/oder Synthesegas verwandt werden.

Erfindungsgemäß kann durch das vorliegende Messgerät auch eine Bestimmung des Heizwertes eines brennbaren Gasgemisches, insbesondere eines binären oder tenären Gasgemisches, erfolgen. Brennbare Gasgemische umfassen auch methanhaltige Gasgemische - sind jedoch nicht ausschließlich auf diese begrenzt. Die brennbaren Gaskomponenten sind auch nicht auf Kohlenwasserstoffe als brennbare Komponenten beschränkt, sondern es kann z.B. auch Helium, Wasserstoff, usw. als brennbare Komponenten in dem Gasgemisch vorhanden sein.

Das Messgerät kann sowohl zur Erkennung und Qualitätsprüfung eines Gases, z.B. eines Rein- oder Reinstgases und ggf. einfacher Gasgemische (z.B. binärer Gasgemische) genutzt werden. Es kann auch zur Quantifizierung eines Gasgemisches genutzt werden.

Zusätzlich zu dieser Qualifizierung als auch Quantifizierung des Gases, Gasgemisches oder einzelner Komponenten des Gasgemisches kann das Messgerät zur Steuerung eines Mediumsstromes eines Messmediums, insbesondere eines gasförmigen Mediums, verwendet werden und wobei die Steuerung mittels einer Regelvorrichtung erfolgt, wobei die Regelvorrichtung in Abhängigkeit von der einer ersten thermisch-physikalische Eigenschaft und der Dichte des Messmediums angesteuert wird.

Das erfindungsgemäße Messgerät kann einen Massestromregler, der eine Variante der vorgenannten Regelvorrichtung ist, ansteuern oder in einem solchen Massestromregler integriert sein.

Erfindungsgemäß kann das Messgerät zur Steuerung des Mediumsstroms eingesetzt werden, welcher eine Regelung der Zu- und Abfuhr von Gasen in einem Verbrennungsprozess einer Verbrennungsvorrichtung, insbesondere der Zufuhr von Sauerstoff und Brenngasen und/oder der Abfuhr von Verbrennungsgasen umfasst. Das heißt die Verbrennung kann auf einen vorgegebenen Bereich eingestellt und somit hinsichtlich der Heizleistung und/oder dem Materialverbrauch optimiert werden. Das Messgerät kann somit in einer Verbrennungsanlage eingesetzt werden.

Alternativ kann die Verbrennungsvorrichtung, zu deren Steuerung das Messgerät eingesetzt wird, in einer Verbrennungskraftmaschine angeordnet sein. Das Messgerät kann dabei zur Optimierung des Verbrennungsprozesses in der Verbrennungskraftmaschine, insbesondere in einem Verbrennungsmotor eines Land- oder Wasserfahrzeugs eingesetzt werden. Somit kann der Schadstoffausstoss minimiert und der Verbrennungsprozess an den optimalen Leistungsbereich des jeweiligen Motors angepasst werden.

Zusätzlich oder alternativ kann durch das Messgerät auch eine Analyse des Abgases der Verbrennungsvorrichtung erfolgen. Das Analyseergebnis kann darin bestehen, dass ein bestimmter Anteil einer der Art nach bekannten Gaskomponente eines Gasgemisches einen Grenzwert überschreitet.

Auch eine Steuerung im Bereich der Medizinalanwendungen ist denkbar. So kann das vorbeschriebene Messgerät erfindungsgemäß zur Dosierung von Narkosegas eingesetzt werden.

Das Messgerät kann zur Einstellung des Verhältnisses der Einzelkomponenten bei der Bereitstellung von Tauchgas genutzt werden.

Das Messgerät kann auch in einem Biogasreaktor eingesetzt werden und insbesondere zur Abgasmessung, Schadgasüberwachung und/oder Zusammensetzungsüberwachung zu-und abgeführter Gase genutzt werden.

Gaschromatographen sind an sich bekannt. In vielen Modellen werden kapillarartige GC-Säulen in einer Messkammer angeordnet. Kommt es an z.B. an den Anschlussstellen der GC-Säule zu Leckagen, so kann ein in der Messkammer angeordnetes Messgerät diese Detektieren.

Ein am Säulenende bzw. nach der GC-Säule angeordnetes Messgerät kann zudem die Überwachung des Verhältnisses zwischen Trägergas und Analyt übernehmen. So wird garantiert, dass die GC-Säule nicht durch Analyt überladen wird und damit die chromatgraphische Trennung optimal erfolgt.

Das Messgerät kann auch durch Ermittlung der thermischen Eigenschaften, der Viskosität und/oder der Dichte des Messmediums eine Detektion eines Gefahrstoffes in einer Atmosphäre, insbesondere in Luft vornehmen und ggf. eine Warnmeldung veranlassen, wobei das Warnsignal an die Art des Gase angepasst ist. Bei einer akustischen Warnmeldung kann die Tonabfolge z.B. anzeigen, ob es sich um einen explosiven oder einen giftigen Gefahrenstoff handelt.

Auch der Reinheitsgrad eines einkomponentigen Gases oder eines Gasgemisches mit definiertem Verhältnis der Komponenten kann mittels des Messgerätes überwacht werden. Ein typischer Anwendungsfall wäre z.B. die Überprüfung der Reinheit von Schwefelhexafluorid $SF_6$.

Das Messgerät kann als Handgerät ausgebildet sein. So kann es z.B. auch für die Qualitätskontrolle an Übergabestellen von Rein- und Reinstgasen genutzt werden und ggf. bei nicht hinreichender Reinheit eine Warnmeldung ausgeben.

Ein weiterer Anwendungsfall für das erfindungsgemäße Messgerät betrifft die Regelung der Brennstoffzufuhr in einer Brennstoffzelle.

Ein besonderer Vorteil des Messgerätes und einer Verwendung liegt darin, dass die Bestimmung einer ersten thermisch-physikalische Eigenschaft und/oder die Bestimmung der Viskosität $\mu$ und/oder der Dichte $\rho$ des Messmediums (M) durch das Messgerät in Echtzeit erfolgen kann.

Echtzeit bedeutet in diesem Zusammenhang eine Zeit zwischen dem Erfassen eines Messwertes und Ausgabe eines Ausgabewertes hinsichtlich eines Durchflusses, einer oder mehrerer thermisch-physikalischer Eigenschaften, der Viskosität, der Dichte, der Konzentration, eines Masseanteils, eines Volumenanteils und/oder eines Partialdrucks zumindest einer Komponente oder mehrerer Komponenten eines mehrkomponentigen Messmediums in einem Zeitraum von weniger als drei Sekunden, insbesondere weniger als eine Sekunde.

Die Messung kann dadurch insbesondere auch kontinuierlich erfolgen und mit dem vorgenannten maximalen Zeitversatz von weniger als drei Sekunden z.B. an den Nutzer oder eine Prozessleitstelle ausgegeben werden.

## Patentansprüche

1. Verfahren zum Betreiben eines Messgerätes, insbesondere eines Durchfluss-Messgerätes, zur Bestimmung der Konzentration, des Volumenanteils, des Massenanteils und/oder des Partialdruckes zumindest einer Komponente in einem mehrkomponentigen Messmedium,
wobei das Messgerät zumindest einen ersten Sensor (11, 31, 41) zur Bestimmung einer ersten thermisch-physikalische Eigenschaft, ausgesucht aus der Wärmeleitfähigkeit K, der Temperaturleitfähigkeit $\alpha$ und/oder der spezifischen Wärmekapazität $c_p$ des Messmediums aufweist,
und wobei das Messgerät zumindest einen zweiten Sensor (12) aufweist, welcher zur Bestimmung der Viskosität $\mu$ und/oder der Dichte $\rho$ des Messmediums (M) vorgesehen ist,
wobei das Verfahren die folgenden Schritte aufweist:

    a) Bereitstellen von Informationen hinsichtlich der Art der möglichen Komponenten des Messmediums;
    b) Bereitstellen von Datensätzen bezüglich der Fluideigenschaften, nämlich der Viskosität, der Dichte, der Wärmeleitfähigkeit, der Temperaturleitfähigkeit, der spezifischen Wärmekapazität und/oder darauf rückführbarer Werte für Einzelkomponenten und/oder Komponentengemische, welche mit den Fluideigenschaften korrespondieren, welche durch den ersten und den zweiten Sensor bestimmt werden;
    c) Ermitteln von Messwerten des ersten und des zweiten Sensors, mit welchen zumindest zwei Fluideigenschaften des mehrkomponentigen Messmediums rückführbar, insbesondere berechenbar, sind, wobei eine erste Fluideigenschaft ausgesucht ist aus der Viskosität des Messmediums und der Dichte des Messmediums und eine zweite Fluideigenschaft ausgesucht ist aus der Wärmeleitfähigkeit des Messmediums, der Temperaturleitfähigkeit des Messmediums oder der spezifischen Wärmekapazität des Messmediums
    d) Ermittlung einer Konzentration, eines Masseanteils, eines Volumenanteils und/oder eines Partialdrucks zumindest einer Komponente des mehrkomponentigen Messmediums anhand der Messwerte oder zumindest zwei der daraus ermittelten Fluideigenschaften und der Datensätze.

2. Verfahren nach Anspruch 1, wobei das Bereitstellen von Datensätzen bezüglich der Fluideigenschaften Datensätze der Viskosität, der Dichte, der Wärmeleitfähigkeit, der Temperaturleitfähigkeit, der spezifischen Wärmekapazität und/oder darauf rückführbarer Werte für Einzelkomponenten und/oder Komponentengemische, welche mit den Fluideigenschaften korrespondieren, umfasst welche durch den ersten und den zweiten Sensor bestimmt werden.

3. Verfahren nach Anspruch 1 oder 2, wobei rückführbare Werte physikalische Größen bzw. Werte umfassen, welche sich aus einer oder mehreren bekannten Fluideigenschaften ggf. unter Verwendung von Konstanten berechnen lassen.

4. Verfahren nach einem der vorhergehenden Ansprüche, wobei die Datensätze bezüglich der Fluideigenschaften unmittelbar die Fluideigenschaften oder bereits in eine Messgröße umgerechnete Werte umfassen, woraus die Fluideigenschaften berechenbar sind.

5. Verfahren nach einem der vorhergehenden Ansprüche, wobei die Ermittlung einer Konzentration, eines Masseanteils, eines Volumenanteils und/oder eines Partialdrucks zumindest einer Komponente des mehrkomponentigen Messmediums anhand der Messwerte oder zumindest zwei der daraus ermittelten Fluideigenschaften und der Datensätze durch einen Vergleich erfolgt.

6. Verfahren nach Anspruch 5, wobei die gemessenen und die in Datensätzen bereitgestellten theoretischen Fluideigenschaften verglichen werden oder die gemessenen und in Datensätzen bereitgestellten Werte der Messgrößen verglichen werden.

7. Verfahren nach einem der vorhergehenden Ansprüche, wobei Messwerte ermittelt werden, auf welche zumindest drei der Fluideigenschaften rückführbar sind, und wobei die Ermittlung einer Konzentration, eines Masseanteils, eines Volumenanteils und/oder eines Partialdrucks zumindest einer Komponente anhand dieser Messwerte oder zumindest der drei Fluideigenschaften und anhand der Datensätze erfolgt.

8. Verfahren nach einem der vorhergehenden Ansprüche, wobei weiterhin die Temperatur und/oder der Druck des mehrkomponentigen Mediums ermittelt und bei der Berechnung der Konzentration, des Masseanteils, des Volumenanteils oder des Partialdrucks der zumindest einen Komponente des mehrkomponentigen Messmediums berücksichtigt wird.

9. Verfahren nach Anspruch 8, wobei die Temperatur und/oder der Druck mittels eines Korrekturalgorithmus für die temperatur- und/oder druckbedingten Änderungen der Fluideigenschaften berücksichtigt wird, oder wobei Datensätze für unterschiedliche Temperatur- und/oder Druckbereiche bereitgestellt sind.

10. Verfahren nach einem der vorhergehenden Ansprüche zur Konzentrationsbestimmung zumindest einer Komponente eines Gasgemisches, wobei es sich bei dem Gasgemisch um ein binäres und/oder ternäres Gasgemisch handelt.

11. Verfahren nach einem der vorhergehenden Ansprüche zur Konzentrationsbestimmung zumindest einer Komponente eines Gasgemisches, wobei die eine Komponente ein aliphatischer Kohlenwasserstoff mit einer Kettenlänge von weniger als 4 C-Atomen, insbesondere Methan, ist.

12. Verfahren nach einem der vorhergehenden Ansprüche zur Konzentrationsbestimmung zumindest einer Komponente eines Gasgemisches, wobei die Konzentrationen aller Komponenten des tenären Gasgemisches bestimmt werden.

13. Verfahren nach einem der vorhergehenden Ansprüche zur Bestimmung des Methananteils in einem methanhaltigen Gasgemisch, insbesondere in Erdgas, Deponiegas, Biogas und/oder Synthesegas.

14. Verfahren nach einem der vorhergehenden Ansprüche zur Bestimmung des Heizwertes eines brennbaren Gasgemisches, insbesondere eines binären oder tenären Gasgemisches.

15. Messgerät, zur Durchführung des Verfahrens nach einem der Ansprüche 1 bis 14,
wobei das Messgerät zumindest ein erstes Bauteil (2, 22) aufweist, in welchem ein integraler Messkanal vorgesehen ist
oder
welches erste Bauteil (2, 22) in Verbindung mit weiteren Bauteilen (3, 7) einen Messkanal (20) integral im Messgerät ausbildet,
wobei der Messkanal (20) vorgesehen ist zur Leitung eines Messmediums (M) durch das Messgerät,
wobei das Bauteil (2, 22) einen ersten Sensor (11, 31, 41) zur Bestimmung einer ersten thermisch-physikalischen Eigenschaft, ausgesucht aus der thermischen Wärmeleitfähigkeit K, der Temperaturleitfähigkeit a und/oder der spezifischen Wärmekapazität $\rho c_p$ des Messmediums aufweist,
und wobei das Messgerät einen zweiten Sensor (12) aufweist, welcher vibriert und zur Bestimmung der Viskosität µ und/oder der Dichte ρ des Messmediums (M) vorgesehen ist,
wobei das Messmedium (M) durch den Messkanal (20) vom ersten Sensor (11, 31, 41) zum zweiten Sensor (12) geführt wird,
wobei die Bestimmung der zumindest einen thermisch-physikalischen Eigenschaft nach der 3omega Methode oder durch Auswertung der Amplitude und der Phase der Temperatur-Messpunkte eines Temperatursignals erfolgt,
wobei das Messgerät zumindest eine Auswerteeinheit (8) aufweist, welche eingerichtet ist, aus Messwerten, welche durch den ersten und/oder zweiten Sensor (11, 12, 31, 41) gemessen werden, zumindest die thermische Wärmeleitfähigkeit K, die Temperaturleitfähigkeit a, die spezifische Wärmekapazität $\rho c_p$, die Viskosität µ und/oder die Dichte ρ des Messmediums (M) zu bestimmen und das Ermitteln einer Konzentration, eines Masseanteils, eines Volumenanteils und/oder eines Partialdrucks zumindest einer Komponente des mehrkomponentigen Messmediums anhand der Messwerte oder zumindest zwei der daraus ermittelten Fluideigenschaften und der Datensätze durchzuführen.

16. Messgerät nach Anspruch 15, **dadurch gekennzeichnet, dass** das Messgerät ein thermisches Massendurchflussmessgerät (1) ist, wobei der erste Sensor (11, 31, 41) zudem zur Bestimmung des Massendurchflusses des Messmediums (M) durch den Messkanal (20) vorgesehen ist.

17. Messgerät nach einem der Ansprüche 15 bis 16, **dadurch gekennzeichnet, dass** der zweite Sensor (12) einen oder mehrere Cantilever umfasst.

## Claims

1. Procedure for operating a measuring device, particularly a flowmeter, designed to determine the concentration, the volume share, the mass share and/or the partial pressure of at least one component in a multi-component medium, wherein the measuring device has at least a first sensor (11, 31, 41) to determine a first thermo-physical property selected from the thermal conductivity k, the thermal diffusivity σ and/or the specific heat capacity $\rho c_p$ of the measured medium,
   and wherein the measuring device has a second sensor (12), which is provided to determine the viscosity µ and/or the density ρ of the measured medium (M),
   said procedure comprising the following steps:

   a) Provision of information concerning the type of possible components of the measured medium;
   b) Provision of datasets concerning the fluid properties, particularly the viscosity, the density, the thermal conductivity, the thermal diffusivity, the specific heat capacity and/or values traceable to these properties for individual components and/or component mixtures which correspond to the fluid properties which are determined by the first and the second sensor;
   c) Determination of measured values of the first and second sensor, with which at least two fluid properties of the multi-component measured medium can be traced, particularly calculated, wherein a first fluid property is selected from the viscosity of the measured medium and the density of the measured medium, and a second fluid property is selected from the thermal conductivity of the measured medium, the thermal diffusivity of the measured medium or the specific heat capacity of the measured medium
   d) Determination of a concentration, a mass share, a volume share and/or a partial pressure of at least a component of the multi-component measured medium using the measured values or at least two of the fluid properties determined from the values, and the datasets.

2. Procedure as claimed in Claim 1, wherein the provision of datasets regarding the fluid properties comprises datasets for the viscosity, the density, the thermal conductivity, the thermal diffusivity, the specific heat capacity and/or values that can be traced to said properties for individual components and/or component mixes corresponding to the fluid properties, said values being determined by the first and the second sensor.

3. Procedure as claimed in Claim 1 or 2, wherein the traceable values comprise physical variables or values which can be calculated from one or more known fluid properties, using constants where applicable.

4. Procedure as claimed in one of the previous claims, wherein the datasets for the fluid properties directly comprise the fluid properties or values already converted to a measured variable from which the fluid properties can be calculated.

5. Procedure as claimed in one of the previous claims, wherein a concentration, mass share, volume share and/or partial pressure of at least a component of the multi-component measured medium is determined using the measured values or at least two of the fluid properties determined from these values, and the datasets, by a comparison being performed.

6. Procedure as claimed in Claim 5, wherein the measured properties and the theoretical fluid properties provided in the datasets are compared or the measured values and the values of the measured variables provided in the datasets are compared.

7. Procedure as claimed in one of the previous claims, wherein measured values are determined to which at least three of the fluid properties can be traced, and wherein a concentration, mass share, volume share and/or partial pressure of at least a component is determined using these measured values or at least the three fluid properties and using the datasets.

8. Procedure as claimed in one of the previous claims, wherein the temperature and/or the pressure of the multi-component medium is/are determined and taken into consideration in the calculation of the concentration, the mass share, the volume share or the partial pressure of the at least one component of the multi-component measured medium.

9. Procedure as claimed in Claim 8, wherein the temperature and/or the pressure is/are taken into consideration using a correction algorithm for the changes in the fluid properties caused by the temperature and/or the pressure, or wherein datasets are provided for different temperature and/or pressure ranges.

10. Procedure as claimed in one of the previous claims to determine the concentration of at least a component of a gas mixture, wherein the gas mixture is a binary and/or ternary mixture.

11. Procedure as claimed in one of the previous claims to determine the concentration of at least a component of a gas mixture, wherein the component is an aliphatic hydrocarbon with a chain length of less than 4 carbon atoms, particularly methane.

12. Procedure as claimed in one of the previous claims to determine the concentration of at least a component of a gas mixture, wherein the concentrations of all the components of the ternary gas mixture are determined.

13. Procedure as claimed in one of the previous claims to determine the methane share in a gas mixture containing methane, particularly in natural gas, landfill gas, a biogas and/or synthetic gas.

14. Procedure as claimed in one of the previous claims to determine the calorific value of a combustible gas mixture, particularly a binary or ternary gas mixture.

15. Measuring device designed to perform the procedure as claimed in one of the Claims 1 to 14,
    wherein the measuring device has at least a first component (2, 22) in which an integral measuring channel is provided or
    said first component (2, 22) forms an integral measuring channel (20) in the measuring device in connection with other components (3, 7),
    wherein the measuring channel (20) is provided to conduct a measured medium (M) through the measuring device,
    wherein the component (2, 22) has a first sensor (11, 31, 41) to determine a first thermo-physical property selected from the thermal conductivity k, the thermal diffusivity $\sigma$ and/or the specific heat capacity $\rho c_p$ of the measured medium, and wherein the measuring device has a second sensor (12), which vibrates and is provided to determine the viscosity $\mu$ and/or the density $\rho$ of the measured medium (M),
    wherein the measured medium (M) is guided through the measuring channel (20) from the first sensor (11, 31, 41) to the second sensor (12),
    wherein the at least one thermo-physical property is determined according to the 3omega method or by evaluating the amplitude and the phase of the temperature measuring points of a temperature signal,
    wherein the measuring device has at least one evaluation unit (8), which is designed to determine, on the basis of measured values that are measured by the first and/or the second sensor (11, 12, 31, 41), at least the thermal conductivity k, the thermal diffusivity $\sigma$, the specific heat capacity $\rho c_p$, the viscosity $\mu$ and/or the density $\rho$ of the measured medium (M) and to determine a concentration, a mass share, a volume share and/or a partial pressure of at least one component of the multi-component measured medium using the measured values or at least two of the fluid properties that are determined from the values, and the datasets.

16. Measuring device as claimed in Claim 15, **characterized in that** the measuring device is a thermal mass flowmeter (1), wherein the first sensor (11, 31, 41) is also provided to determine the mass flow of the measured medium (M) through the measuring channel (20).

17. Measuring device as claimed in one of the Claims 15 to 16, **characterized in that** the second sensor (12) comprises one or more cantilevers.

**Revendications**

1. Procédé destiné à l'exploitation d'un appareil de mesure, notamment un débitmètre, destiné à la détermination de la concentration, de la part de volume, de la part de masse et/ou de la pression partielle d'au moins un composant dans un produit mesuré à plusieurs composants,
l'appareil de mesure comportant au moins un premier capteur (11, 31, 41) destiné à la détermination d'une première propriété thermophysique choisie parmi la conductibilité thermique k, le coefficient de conductibilité $\sigma$ et/ou la capacité thermique massique $\rho c_p$ du produit mesuré,
et l'appareil de mesure comportant un deuxième capteur (12), lequel est prévu pour la détermination de la viscosité $\mu$ et/ou de la densité $\rho$ du produit mesuré (M),
le procédé comprenant les étapes suivantes :

a) Mise à disposition d'informations concernant le type de composants possibles du produit mesuré ;
b) Mise à disposition de blocs de données concernant les propriétés fluidiques, notamment la viscosité, la densité, la conductibilité thermique, le coefficient de conductibilité, la capacité thermique massique et/ou des valeurs traçables à celles-ci pour des composants individuels et/ou des mélanges de composants correspondant aux propriétés fluidiques, lesquelles valeurs sont déterminées par le premier et le deuxième capteur ;
c) Détermination de valeurs mesurées du premier et du deuxième capteur, avec lesquelles au moins deux propriétés fluidiques du produit mesuré à plusieurs composants sont traçables, notamment calculables, une première propriété fluidique étant choisie parmi la viscosité du produit mesuré et la densité du produit mesuré, et une deuxième propriété fluidique étant choisie parmi la conductibilité thermique du produit mesuré, le coefficient de conductibilité du produit mesuré ou la capacité thermique massique du produit mesuré
d) Détermination d'une concentration, d'une part de masse, d'une part de volume et/ou d'une pression partielle d'au moins un composant du produit mesuré à plusieurs composants sur la base des valeurs mesurées ou d'au moins deux des propriétés fluidiques qui en sont déterminées, et des blocs de données.

2. Procédé selon la revendication 1, pour lequel la mise à disposition de blocs de données concernant les propriétés fluidiques comprend des blocs de données de la viscosité, de la densité, de la conductibilité thermique, de la capacité thermique massique et/ou des valeurs traçables à celles-ci pour des composants individuels et/ou des mélanges de composants correspondant aux propriétés fluidiques, lesquelles valeurs sont déterminées par le premier et le deuxième capteur.

3. Procédé selon la revendication 1 ou 2, pour lequel les valeurs traçables comprennent des grandeurs physiques ou des valeurs qui peuvent être calculées à partir d'une ou plusieurs propriétés fluidiques connues, le cas échéant en utilisant des constantes.

4. Procédé selon l'une des revendications précédentes, pour lequel les blocs de données concernant les propriétés fluidiques comprennent directement les propriétés fluidiques ou des valeurs déjà converties en une grandeur mesurée à partir de laquelle les propriétés fluidiques peuvent être calculées.

5. Procédé selon l'une des revendications précédentes, pour lequel la détermination d'une concentration, d'une part de masse, d'une part de volume et/ou d'une pression partielle d'au moins un composant du produit mesuré à plusieurs composants au moyen des valeurs mesurées ou d'au moins deux des propriétés fluidiques déterminées à partir de celles-ci, et des blocs de données, s'effectue au moyen d'une comparaison.

6. Procédé selon la revendication 5, pour lequel les propriétés mesurées et les propriétés fluidiques théoriques mises à disposition dans des blocs de données sont comparées ou les valeurs mesurées et les valeurs des grandeurs de mesure mises à disposition dans des blocs de données sont comparées.

7. Procédé selon l'une des revendications précédentes, pour lequel on détermine des valeurs mesurées auxquelles au moins trois des propriétés fluidiques sont traçables, et procédé pour lequel la détermination d'une concentration, d'une part de masse, d'une part de volume et/ou d'une pression partielle d'au moins un composant est effectuée sur la base de ces valeurs mesurées ou d'au moins les trois propriétés fluidiques et sur la base des blocs de données.

8. Procédé selon l'une des revendications précédentes, pour lequel en outre la température et/ou la pression du produit à plusieurs composants est/sont déterminée(s) et prise(s) en compte dans le calcul de la concentration, de la part massique, de la part volumique ou de la pression partielle d'au moins un composant du produit mesuré à plusieurs composants.

9. Procédé selon la revendication 8, pour lequel la température et/ou la pression est/sont prise(s) en compte au moyen d'un algorithme de correction pour les changements des propriétés fluidiques liés à la température et/ou à la pression, ou pour lequel des blocs de données sont mis à disposition pour différentes gammes de température et/ou de pression.

10. Procédé selon l'une des revendications précédentes, destiné à la détermination de la concentration d'au moins un composant d'un mélange gazeux, le mélange gazeux étant un mélange gazeux binaire et/ou ternaire

11. Procédé selon l'une des revendications précédentes, destiné à la détermination de la concentration d'au moins un composant d'un mélange gazeux, procédé pour lequel le dit composant est un hydrocarbure aliphatique ayant une longueur de chaîne inférieure à 4 atomes de carbone, notamment du méthane.

12. Procédé selon l'une des revendications précédentes, destiné à la détermination de la concentration d'au moins un composant d'un mélange gazeux, procédé pour lequel les concentrations de l'ensemble des composants du mélange gazeux ternaire sont déterminées.

13. Procédé selon l'une des revendications précédentes, destiné à la détermination de la teneur en méthane dans un mélange gazeux contenant du méthane, notamment dans un gaz naturel, un gaz de décharge, un biogaz et/ou un gaz de synthèse.

14. Procédé selon l'une des revendications précédentes, destiné à la détermination du pouvoir calorifique d'un mélange gazeux combustible, notamment d'un mélange gazeux binaire ou ternaire.

15. Appareil de mesure destiné à la réalisation du procédé selon l'une des revendications 1 à 14,
pour lequel l'appareil de mesure comporte au moins un premier composant (2, 22), dans lequel un canal de mesure intégral est prévu
ou
lequel premier composant (2, 22) constitue, en liaison avec d'autres composants (3, 7), un canal de mesure (20), le canal de mesure (20) étant prévu pour le guidage d'un produit mesuré (M) à travers l'appareil de mesure, le composant (2, 22) comportant un premier capteur (11, 31, 41) destiné à la détermination d'une première propriété thermophysique choisie parmi la conductibilité thermique k, le coefficient de conductibilité $\sigma$ et/ou la capacité thermique $\rho c_p$ massique du produit mesuré,
et l'appareil de mesure comportant un deuxième capteur (12), lequel vibre et est prévu pour la détermination de la viscosité $\mu$ et/ou de la densité $\rho$ du produit mesuré (M),
le produit mesuré (M) étant guidé à travers le canal de mesure (20) du premier capteur (11, 31, 41) au deuxième capteur (12),
la détermination de l'au moins une propriété thermophysique s'effectuant d'après la méthode 3omega ou par l'évaluation de l'amplitude et de la phase des points de mesure de température d'un signal de température,
l'appareil de mesure comportant au moins une unité d'évaluation (8), laquelle est conçue de telle sorte à déterminer, à partir des valeurs mesurées par le premier et/ou le deuxième capteur (11, 12, 31, 41), au moins la conductibilité thermique k, le coefficient de conductibilité $\sigma$, la capacité thermique massique $\rho c_p$, la viscosité $\mu$ et/ou la densité $\rho$ du produit mesuré (M) et à effectuer la détermination d'une concentration, d'une part de masse, d'une part de volume et/ou d'une pression partielle d'au moins un composant du produit mesuré à plusieurs composants sur la base des valeurs mesurées ou d'au moins deux des propriétés fluidiques qui en sont déterminées, ainsi que des blocs de données.

16. Appareil de mesure selon la revendication 15, **caractérisé en ce que** l'appareil de mesure est un débitmètre massique (1), le premier capteur (11, 31, 41) étant en outre prévu pour la détermination du débit massique du produit mesuré (M) à travers le canal de mesure (20).

17. Appareil de mesure selon l'une des revendications 15 à 16, **caractérisé en ce que** le deuxième capteur (12) comprend un ou plusieurs cantilever.

Fig. 1

Fig. 2

11c

11a

11b

Fig. 3

17

y

15    18    16

Fig. 4

Fig. 5

Fig. 6

Fig. 7

Fig. 8

Fig. 9

Fig. 10

Fig. 10A

Fig. 11

Fig. 12

Fig. 13

Fig. 14

Fig. 15

Messwert anderer Sensoren, z.B. Schallgeschwindigkeit — 110

Druck, Temperatur — 104

Messwerte der 4 Fluideigenschaften: Dichte, Viskosität, Wärmeleitung, spezifische Wärmekapazität aus MEMS-Gaspropsensor — 106

SW-Algorithmus: "Reverse Gasengine" — 103

Warnhinweis: Gas entspricht nicht der Annahmen — 110

Komponente 1: x%
Komponente 2: y%
...
Komponente n: z% — 102

Datenbank — 101

Gewünschte Genauigkeit der Bestimmung — 109

Vorwissen über Zusammensetzung: Y/N? — 105

Y: Anzahl Komponenten? 1 - n — 107

Y: Gasart? 1 - n — 108

Fig 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5311447 A1

- DE 102012102979 A1

**In der Beschreibung aufgeführte Nicht-Patentliteratur**

- Thermal property determination of laminar-flowing fluids utilizing the frequency response of a calorimetric flow sensor. **BEIGELBECK, R. ; F. KOHL ; S. CERIMOVIC ; A. TALIC ; F. KEPLINGER ; B. JAKOBY.** Sensors, 2008 IEEE. IEEE, 2008, 518-521
- Sensor for gas analysis based on thermal conductivity, specific heat capacity and thermal diffusivity. **KLICHE, K. ; S. BILLAT ; F. HEDRICH ; C. ZIEGLER ; R. ZENGERLE.** In Micro Electro Mechanical Systems (MEMS), 2011 IEEE 24th International Conference on. IEEE, 2011, 1189-1192
- **GAUTHIER ; SEBASTIAN ; ALAIN GIANI ; PHILIPPE COMBETTE.** Gas thermal conductivity measurement using the three-omega method. *Sensors and Actuators A: Physical,* 2013
- **NAELI ; KIANOUSH ; OLIVER BRAND.** Dimensional considerations in achieving large quality factors for resonant silicon cantilevers in air. *Journal of Applied Physics,* 2009, vol. 105 (1), 014908-014908

- **VAN EYSDEN ; CORNELIS A ; JOHN E. SADER.** Frequency response of cantilever beams immersed in compressible fluids with applications to the atomic force microscope. *Journal of Applied Physics,* 2009, vol. 106 (9), 094904-094904
- **GHATKESAR ; MURALI KRISHNA ; EKATERINA RAKHMATULLINA ; HANS-PETER LANG ; CHRISTOPH GERBER ; MARTIN HEGNER ; THOMAS BRAUN.** Multi-parameter microcantilever sensor for comprehensive characterization of Newtonian fluids. *Sensors and Actuators B: Chemical,* 2008, vol. 135 (1), 133-138
- **GOODWIN, A. R. H. ; A. D. FITT ; K. A. RONALDSON ; W. A. WAKEHAM.** A vibrating plate fabricated by the methods of microelectromechanical systems (MEMS) for the simultaneous measurement of density and viscosity: results for argon at temperatures between 323 and 423K at pressures up to 68 MPa. *International journal of thermophysics,* 2006, vol. 27 (6), 1650-1676